(19) **Europäisches Patentamt**

**European Patent Office**

**Office européen des brevets**

(11) **EP 1 365 139 B1**

(12) **EUROPEAN PATENT SPECIFICATION**

(45) Date of publication and mention
of the grant of the patent:
**20.04.2005 Bulletin 2005/16**

(51) Int Cl.⁷: **F02M 25/07**

(21) Application number: **03011624.8**

(22) Date of filing: **22.05.2003**

(54) **Abnormality diagnostic method for exhaust gas recirculation control system**

Verfahren zur Abnomalitätsdiagnose für Abgasrückführungssteuerungssystem

Méthode de diagnostic d'anomalies pour système de contrôle de récirculation de gaz d'échappement

(84) Designated Contracting States:
**DE ES FR GB IT**

(30) Priority: **24.05.2002 JP 2002151262**

(43) Date of publication of application:
**26.11.2003 Bulletin 2003/48**

(73) Proprietor: **TOYOTA JIDOSHA KABUSHIKI KAISHA**
**Toyota-shi, Aichi-ken 471-8571 (JP)**

(72) Inventors:
• **Uchida, Takahiro,**
**c/o Toyota Jidosha Kabushiki K.**
**Aichi-ken, 471-8571 (JP)**
• **Kotani, Akira, c/o Toyota Jidosha Kabushiki K.**
**Aichi-ken, 471-8571 (JP)**
• **Itoh, Yoshiyasu,**
**c/o Toyota Jidosha Kabushiki K.**
**Aichi-ken, 471-8571 (JP)**
• **Morikawa, Atsushi,**
**c/o Toyota Jidosha Kabushiki K.**
**Aichi-ken, 471-8571 (JP)**

(74) Representative:
**Leson, Thomas Johannes Alois, Dipl.-Ing.**
**Tiedtke-Bühling-Kinne & Partner GbR,**
**TBK-Patent,**
**Bavariaring 4**
**80336 München (DE)**

(56) References cited:
**US-A- 5 385 130**         **US-A- 5 632 257**
**US-A- 6 024 075**         **US-A1- 2001 045 209**
**US-B1- 6 363 922**

**Description**

BACKGROUND OF THE INVENTION

1. Field of the Invention

The invention relates to a method for diagnosing an abnormality in an exhaust gas recirculation control system provided in an internal combustion engine.

2. Description of the Related Art

Internal combustion engines are typically equipped with a so-called exhaust gas recirculation (or EGR) system provided in a passage (an exhaust gas recirculation passage) that connects an exhaust gas passage with an intake air passage, which returns some of the exhaust gas flowing through the exhaust gas passage to the intake air passage via that exhaust gas recirculation passage. According to his exhaust gas recirculation system, some of the exhaust gas is mixed with the air-fuel mixture, which increases the amount of heat of the gas mixture and lowers the combustion temperature, thereby reducing nitrogen oxide (NOx) in the exhaust gas.

Further, this exhaust gas recirculation system is provided with a flow control valve disposed midway in the exhaust gas recirculation passage. By driving this flow control valve open and closed based on the operating state of the engine, the exhaust gas recirculation system controls the amount of exhaust gas that is returned to the intake air passage, i.e., the exhaust gas recirculation system controls the flow control valve so that the amount of recirculated exhaust gas is suitable for the operating state of the engine.

For example, when the engine is operating under a medium or low load, the amount of recirculated exhaust gas is increased so as to reduce the amount of NOx discharged. On the other hand, at times such as when the engine is operating under a high load, the amount of recirculated exhaust gas is reduced or exhaust gas recirculation is stopped altogether to ensure sufficient engine output and, more particularly, to inhibit an increase in particulate matter (PM) in the exhaust gas of diesel engines and the like. As described above, it is preferable to suitably control the amount of recirculated exhaust gas while both reducing the amount of NOx discharged and inhibiting an increase in the amount of PM discharged at the same time.

If there is an abnormality in the exhaust gas recirculation system, for example, if the flow control valve malfunctions or if the exhaust gas recirculation passage is blocked, it becomes difficult to control the amount of recirculated exhaust gas to an amount that is appropriate for the operating state of the engine. For example, if the flow control valve becomes stuck, so that it is no longer operable, near the fully open position, an excessive amount of exhaust gas may be recirculated depending on the operating state of the engine. Therefore, although the combustion temperature becomes extremely low and the generation of NOx is suppressed, it is no longer possible to avoid an increase in the amount of PM discharged due to incomplete combustion of the mixture. Accordingly, when there is an abnormality of some sort in the exhaust gas recirculation system, such as in the flow control valve or the exhaust gas recirculation passage, it is preferable to diagnose, and deal with, that abnormality as quickly as possible.

Various art, such as that described above, related to the invention has been proposed for diagnosing an abnormality in an exhaust gas recirculation system. For example, art disclosed in Japanese Patent Laid-Open Publication No. 04-140464 forcibly changes the opening of the flow control valve by changing the position of the flow control valve to the fully closed or fully open position, compares the change in the intake air pressure generated by this change in opening with a determining value set based on that amount of change in the opening, and diagnoses an abnormality based on the results of that comparison.

That is, according to the abnormality diagnostic method according to the related art described above, the flow control valve is controlled so as to be in the fully open position, for example. If the flow control valve operates normally and opens to the fully open position according to that control, exhaust gas of an amount appropriate for the fully open position is recirculated within the intake air passage according to a pressure difference between the exhaust gas pressure and the intake air pressure. As a result, the intake air pressure increases by the recirculation of the exhaust gas. Accordingly, if the increase amount in the intake air pressure does not reach a predetermined pressure set appropriately according to the pressure difference and the like, it can be determined that there is an abnormality in the exhaust gas recirculation system. The abnormality may be, for example, that the flow control valve is not reaching the fully open position because it is not operating normally, or that the exhaust gas recirculation passage is blocked.

As described above, with the exhaust gas recirculation system, it is necessary to suitably control the amount of recirculated exhaust gas while both reducing the amount of NOx discharged and inhibiting an increase in the amount of PM discharged. Of course, the control itself of the amount of the recirculated exhaust gas is a critical factor in achieving these. In view of the original object of the exhaust gas recirculation system, which is to purify the exhaust gas, however, the exhaust gas characteristics (in this specification, referring to in this specification as the overall exhaust gas characteristics which, in addition to the exhaust gas characteristics of the internal combustion engine, include the purification characteristics of an exhaust gas control apparatus, such as a NOx catalyst apparatus and a PM filter) of the internal combustion engine in which the exhaust gas recirculation system is provided can not be ignored. Accordingly, even when diagnosing an abnormality in the exhaust gas recirculation system, it is preferable to consider the specific exhaust gas characteristics of the engine.

For example, there exists an internal combustion engine having exhaust gas characteristics such that, if there is an abnormality in the exhaust gas recirculation system that results in the amount of recirculated exhaust gas even slightly exceeding the amount originally required, the tendency of incomplete combustion of the mixture becomes remarkable, resulting in the amount of PM discharged increasing drastically. Also, even in an internal combustion engine having these kinds of exhaust gas characteristics, because an increase in the amount of NOx discharged due to an insufficient amount of recirculated exhaust gas is kept within a range where it is can essentially be ignored, there are cases in which it is actually not as necessary to consider an abnormality where the amount of recirculated exhaust gas is insufficient as it is to consider an abnormality where the amount of recirculated exhaust gas is excessive.

Accordingly, the exhaust gas recirculation system of the internal combustion engine having these kinds of exhaust gas characteristics quickly detects an excessive amount of recirculated exhaust gas as an abnormality, for example. On the other hand, when the amount of recirculated exhaust gas is insufficient, then depending on the degree of that insufficiency, it may even be practical to deal flexibly with abnormalities; for example, either wait before making a positive diagnosis (i.e., a diagnosis or determination that an abnormality exists) or regard an insufficiency of that degree as normal, in order to avoid excessive positive diagnoses from being made.

With the abnormality diagnostic method according to the foregoing related art, however, a uniform mode is used to diagnose abnormalities, regardless of whether the amount of recirculated exhaust gas from the exhaust gas recirculation system is over a target amount or below the target amount. Therefore, there remains room for improvement with respect to conducting an abnormality diagnostic that is both flexible and practical according to the exhaust gas characteristics of an internal combustion engine such as that described above. The US Patent Document with the Patent Number 5 385 130 which is a prior art document discloses a process for controlling the exhaust gas recirculation system of an internal combustion engine. Therein the process for controlling the recirculation system makes a diagnosis of the E.G.R. valve and adapts the control of the engine control system to take into account the possible deviation of the operation of the valve. The opening of the E.G.R. valve is controlled for given operating conditions of the engine by calculating a representative magnitude of the torque produced by each of the combustions of the engine. A malfunction of the E.G.R. valve is deduced from a obtained predetermined exhaust gas recirculation rate and an actual exhaust gas recirculation rate depending on the engine operation conditions by comparing these values and determining the deviation.

Also, while there are some differences between gas recirculation systems in diesel engines and those in other internal combustion engines such as in-cylinder injection type gasoline engines, diagnosing an abnormality in the exhaust gas recirculation system using a flexible mode according to the exhaust gas characteristics of the engine while attempting to both reduce the amount of NOx discharged and inhibit an increase in the amount of PM discharged is a technological issue that is generally common to all of these exhaust gas recirculation systems.

SUMMARY OF THE INVENTION

In view of the fact that there remains room for improvement in the related art, it is an object of the invention to provide an abnormality diagnostic method for an exhaust gas recirculation control system capable of flexibly and appropriately diagnosing an abnormality thereof according to exhaust gas characteristics of an internal combustion engine.

Hereinafter, a method for solving the foregoing problems will be described in conjunction with the effects thereof. A first aspect of the invention is an abnormality diagnostic method for an exhaust gas recirculation control system (hereinafter, referred to simply as "EGR control system") which employs an exhaust gas recirculation mechanism (hereinafter, referred to simply as "EGR mechanism") that returns some of an exhaust gas flowing through an exhaust gas passage of an internal combustion engine to an intake air passage, and which controls an amount of recirculated exhaust gas by driving the EGR mechanism based on an operating state of the engine. The abnormality diagnostic method includes a monitoring step for monitoring a tendency of exhaust gas recirculation characteristics of the EGR mechanism when the internal combustion engine is in a predetermined operating state to deviate from reference characteristics thereof before conducting an abnormality diagnostic of the EGR mechanism, a diagnostic mode setting step for setting a diagnostic mode for the abnormality diagnostic of the EGR mechanism, based on the monitored deviation tendency of the exhaust gas recirculation characteristics, and an abnormality diagnostic executing step for executing the abnormality diagnostic based on the set diagnostic mode.

According to this construction, when conducting the abnormality diagnostic of the EGR mechanism, a tendency of the exhaust gas recirculation characteristics of the EGR mechanism to deviate from the reference characteristics thereof is monitored in advance when the internal combustion engine is in a predetermined operating state (i.e., the monitoring step). Then, the diagnostic mode for diagnosing an abnormality of the EGR mechanism is set based on that monitored deviation tendency of the exhaust gas recirculation characteristics (i.e., the diagnostic mode setting step). Accordingly, it is possible to set the diagnostic mode of the abnormality diagnostic taking into consideration not only the exhaust gas characteristics of the internal combustion engine, but also the tendency of the exhaust gas recirculation characteristics to deviate from the reference characteristics, which was obtained in advance. By conducting the abnormality diagnostic for the EGR mechanism based on this set diagnostic mode (i.e., the abnormality diagnostic executing step), an abnormality in the EGR control system can be diagnosed both flexibly and quickly according to the exhaust gas characteristics of the internal combustion engine. The tendency of the exhaust gas recirculation characteristics to deviate from the reference characteristics includes, for example, the direction of that deviation from the reference characteristics, as well as the degree of that deviation.

Also, the monitoring step may include a step for obtaining the deviation tendency of the exhaust gas recirculation characteristics of the EGR mechanism based on results of a comparison between an actual amount of recirculated exhaust gas and a predetermined value set based on the predetermined operating state of the engine. Accordingly, the tendency of the exhaust gas recirculation characteristics to deviate from the reference characteristics can be obtained using a mode in which that deviation tendency is obtained based on results of the comparison between the actual amount of recirculated exhaust gas and the predetermined value set based on the predetermined operating state of the engine.

That is, according to this construction, it is possible to appropriately obtain the deviation tendency using the results of comparisons between the actual amount of recirculated exhaust gas and the predetermined value, such as determining whether the actual amount of recirculated exhaust gas from the EGR mechanism is greater than, or less than, the predetermined value set based on the predetermined operating state of the engine, and further, determining the degree of deviation between the actual amount of recirculated exhaust gas and the predetermined value. Thus the abnormality diagnostic mode can be set suitably according to not only the exhaust gas characteristics of the internal combustion engine, but also the deviation tendency obtained through the results of these comparisons.

Also, when setting the abnormality diagnostic mode of the EGR mechanism, the diagnostic mode setting step may include a positive diagnosis condition varying step for variably setting, based on the results of the comparisons between the actual amount of recirculated exhaust gas and the predetermined value obtained in the monitoring step, a condition for making a positive diagnosis for determining in the abnormality diagnostic executing step that there is an abnormality in the EGR mechanism.

According to this construction, it is possible to suitably set the condition for making a positive diagnosis for determining that there is an abnormality according to not only the exhaust gas characteristics of the internal combustion engine, but also the deviation tendency obtained through the results of the comparisons between the actual amount of recirculated exhaust gas and the predetermined value. It is also possible to determine, both flexibly and appropriately, whether an abnormality exists in the EGR control system according to the exhaust gas characteristics of the internal combustion engine.

More specifically, the monitoring step may include a tendency determining step for comparing the actual amount of recirculated exhaust gas with the predetermined value and determining whether a first tendency, in which the actual amount of recirculated exhaust gas is below the predetermined value, exists as the deviation tendency. In addition, the positive diagnosis condition varying step may include a condition tightening step for making the condition for making a positive diagnosis more difficult to fulfill so that it is more difficult for a positive diagnosis to be made when it is determined in the tendency determining step that the first tendency exists.

According to this construction, the actual amount of recirculated exhaust gas is first compared with the predetermined value set based on the predetermined operating state of the engine, and it is then determined based on that comparison whether the first tendency, in which the actual amount of recirculated exhaust gas is below the predetermined value, exists (i.e., the tendency determining step). Here, when there is a tendency for the actual amount of recirculated exhaust gas to be below the predetermined value, it can be determined that the actual amount of recirculated exhaust gas is less than the reference amount of the EGR mechanism that is appropriate for the predetermined operating state of the engine. Accordingly, when an abnormality is diagnosed based on that determination, it can be considered an abnormality in which the actual amount of recirculated exhaust gas from the EGR mechanism is insufficient.

Also according to this construction, when there is a tendency for the actual amount of the recirculated exhaust gas to be less than normal, i.e., when the first tendency exists, the condition for making a positive diagnosis when diagnosing an abnormality in the EGR mechanism is made more difficult to fulfill so that it is more difficult to make a positive diagnosis (i.e., the condition tightening step). Accordingly, even if the amount of recirculated exhaust gas is insufficient, in an engine having exhaust gas characteristics in which an increase in the amount of NOx discharged due to that insufficient amount of recirculated exhaust gas is kept within a range in which it can essentially be ignored, excessive positive diagnoses can be avoided so that abnormalities can be diagnosed appropriately when diagnosing an abnormality in the EGR control system. On the other hand, when there is not a tendency for the actual amount of recirculated exhaust gas to be less than normal, the condition for making a positive diagnosis is not made more difficult to fulfill, so an abnormality can be detected quickly and an increase in the amount of PM discharged can be inhibited.

In this construction, for example, the condition for making a positive diagnosis when determining whether an abnormality exists may also be set, in advance, so that it is more difficult for a positive diagnosis to be made, and changed to make it easier to make a positive diagnosis when it has been determined that a tendency for the actual amount of recirculated exhaust gas to drop below the predetermined value exists as the deviation tendency, with essentially the same results. That is, with this construction as well, effects similar to those of the construction described above are able to be obtained.

Also, in the foregoing construction, a flow sensor which directly detects the actual amount of recirculated exhaust gas may be provided in the EGR mechanism, for example, and whether or not the actual amount of recirculated exhaust gas is below the predetermined value may be determined based on the detection results of the flow sensor. If the flow sensor is provided separately, however, the construction of the EGR mechanism inherently becomes more complex.

With respect to this point, in the tendency determining step of the abnormality diagnostic method for the EGR control system described above, it is possible to compare the actual intake air quantity when the internal combustion engine is in the predetermined operating state with the predetermined value set based on the predetermined operating state of the engine, and determine that the first tendency exists when the actual intake air quantity exceeds the predetermined value.

Also, in the tendency determining step, the actual intake air pressure when the internal combustion engine is in the predetermined operating state may be compared with the predetermined value set based on the predetermined operating state of the engine, and it may be determined that the first tendency exists when the actual intake air pressure is below the predetermined value.

The intake air quantity changes when some of the exhaust gas is introduced into the intake air passage when the EGR control system is recirculating exhaust gas,. When the amount of recirculated exhaust gas is excessive, the intake air quantity decreases by the amount of that excess recirculated exhaust gas, compared to when the amount of recirculated exhaust gas is controlled to the proper amount. In contrast, when the amount of recirculated exhaust gas is insufficient, the intake air quantity increases by the amount of that insufficiency. Accordingly, it is possible to determine whether the amount of recirculated exhaust gas is excessive or insufficient by monitoring the intake air quantity.

According to the abnormality diagnostic method of the EGR control system of the foregoing construction, it is possible to determine, with relative ease, the existence of a tendency in which the actual amount of recirculated exhaust gas is below the predetermined value based on the fact that the actual intake air quantity exceeds the predetermined value set based on the predetermined operating state of the engine, using the characteristics from the relationship between the intake air quantity and the amount of recirculated exhaust gas.

In addition, the change in intake air pressure may be monitored and the determination relating to the amount of exhaust gas may be made using the characteristics from the relationship between the intake air pressure and the amount of recirculated exhaust gas.

That is, when there is an excessive amount of recirculated exhaust gas, the amount of increase in the intake air pressure rises following exhaust gas recirculation by the amount of that excess recirculated exhaust gas, compared to when the amount of recirculated exhaust gas is controlled to the proper amount. As a result, the intake air pressure becomes higher than when exhaust gas recirculation is performed normally. In contrast, when the amount of recirculated exhaust gas is insufficient, the amount of increase in the intake air pressure from recirculation of the exhaust gas decreases by the amount of that insufficiency. As a result, the intake air pressure also decreases to below normal. Accordingly, it is possible to determine whether the amount of recirculated exhaust gas is excessive or insufficient by monitoring the intake air pressure.

Further, according to the abnormality diagnostic method for the EGR control system, which, in the tendency determining step, compares the actual air intake pressure when the internal combustion engine is in the predetermined operating state with the predetermined value set based on the predetermined operating state of the engine, and determines that the first tendency exists when the actual intake air pressure is below the predetermined value, it is possible to determine, with relative ease, that a tendency exists in which the actual amount of recirculated exhaust gas is below the predetermined value based on the fact that the actual intake air pressure is below the predetermined value set based on the predetermined operating state of the engine, using the characteristics from the relationship between the intake air pressure and the amount of recirculated exhaust gas.

An intake air quantity sensor provided in the intake passage upstream of an recirculated exhaust gas introduction port detects the intake air quantity, and an intake air pressure sensor provided in the intake passage downstream of a throttle valve detects the intake air pressure. Both of these sensors perform necessary functions in the internal combustion engine, such as detecting the intake air quantity (or intake air pressure), and are simply diverted from their main functions to detect the actual amount of recirculated exhaust gas. Accordingly, the construction is not made more complex by providing, for example, a separate flow sensor that detects the actual amount of recirculated exhaust gas.

Also, as a more specific example for diagnosing an abnormality in the EGR mechanism, along with a more specific example for making the condition for making a positive diagnosis more difficult to fulfill, in the abnormality diagnostic method for the EGR control system of the foregoing construction, the abnormality diagnostic executing step may include a forced driving step for forcibly driving the EGR mechanism by forcibly changing a driving command value, and a positive diagnosis determining step for determining that there is an abnormality in the EGR mechanism when an amount of change in the actual intake air quantity generated by that forced driving is equal to, or less than, a predetermined determining value set based on an amount of change in the driving command value, and the condition tightening step may include a step for changing the predetermined determining value so as to become smaller when it has been determined in the tendency determining step that the first tendency exists than when it has been determined in the tendency determining step that the first tendency does not exist.

Alternatively, the abnormality diagnostic executing step may include a forced driving step for forcibly driving the EGR mechanism by forcibly changing a driving command value, and a positive diagnosis determining step for determining that there is an abnormality in the EGR mechanism when an amount of change in the actual intake air pressure generated by that forced driving is equal to, or less than, a predetermined determining value set based on an amount of change in the driving command value, and the condition tightening step may include a step for changing the predetermined determining value so as to become smaller when it has been determined in the tendency determining step that the first tendency exists than when it has been determined in the tendency determining step that the first tendency does not exist.

According to the invention of the foregoing constructions, the EGR mechanism is first forcibly driven using a predetermined change in the driving command value (i.e., the forced driving step). If the EGR mechanism is operating normally according to the change in the driving command value when forced driving is executed, the amount of recirculated exhaust gas changes by an amount appropriate for the amount of change in the driving command value. This change in the amount of recirculated exhaust gas then causes the intake air quantity or the intake air pressure to also change. On the other hand, if the EGR mechanism is not operating normally due to a malfunction in the flow control valve, such as sticking, or the exhaust gas recirculation passage being blocked, or the like, the amount of recirculated exhaust gas does not change, or if it does change, the amount of that change is less than the amount that is appropriate for the amount of change in the driving command value. Accordingly, in this case, the amount of change in the intake air quantity and intake air pressure following that change in the amount of recirculated exhaust gas is naturally very slight.

Accordingly, the amounts of change in the intake air quantity and the intake air pressure when forced driving is performed may be monitored, and when those amounts of change are equal to, or less than, respective predetermined determining values set based on the amount of change in the driving command value, that can be diagnosed as an abnormality (i.e., a positive diagnosis can be made).

Also, a positive diagnosis is not made based on a uniform condition for making a positive diagnosis; rather, that condition is made more difficult to fulfill when there is a tendency for the actual amount of recirculated exhaust gas to be insufficient. More specifically, according to the each of the foregoing constructions, the determining value when the abnormality diagnostic is conducted is set low when it is determined that the actual intake air quantity when the engine is in the predetermined operating state exceeds the predetermined value, or when it is determined that the actual intake air pressure when the engine is in the predetermined operating state is below the predetermined value. Therefore, even if the actual amount of recirculated exhaust gas that corresponds with the amount of change in the driving command value is less than the original reference value of the EGR mechanism, it is not diagnosed as an abnormality when that tendency is slight.

Accordingly, even if the amount of recirculated exhaust gas is insufficient, in an engine having exhaust gas characteristics in which an increase in the amount of NOx discharged due to that insufficient amount of recirculated exhaust gas is kept within a range in which it can essentially be ignored, excessive positive diagnoses can be avoided because the condition for making a positive diagnosis was made more difficult to fulfill. On the other hand, when there is not a tendency for the actual amount of recirculated exhaust gas to be insufficient, the condition for making a positive diagnosis is not made more difficult to fulfill, so an abnormality can be detected quickly and an increase in the amount of PM discharged can be inhibited.

Also, the forced driving step may include a step for gradually changing the driving command value in order to perform the forced driving in a plurality of stages when forcibly driving the EGR mechanism, and the abnormality diagnostic executing step may include a step for interrupting the forced driving of the EGR mechanism by stopping the driving command value from changing in a stage after the presence or absence of an abnormality in the EGR mechanism has been determined based on the comparison between the predetermined determining value and the amount of change in the actual intake air quantity.

Also, according to the abnormality diagnostic method for the EGR control system of the foregoing construction, the forced driving step may include a step for gradually changing the driving command value in order to perform the forced driving in a plurality of stages when forcibly driving the EGR mechanism, and the abnormality diagnostic executing step may include a step for interrupting the forced driving of the EGR mechanism by stopping the driving command value from changing in a stage after the presence or absence of an abnormality in the EGR mechanism has been determined based on the comparison between the predetermined determining value and the amount of change in the actual intake air pressure.

Also, the forced driving of the EGR mechanism may be conducted in a plurality of stages by changing the driving command value gradually. The forced driving of the EGR mechanism may then be interrupted by stopping the driving command value from changing in a stage after the presence or absence of an abnormality in the EGR mechanism has been determined in any of the plurality of stages.

In the tendency determining step, it may further be determined whether a second tendency, in which the degree thereof is smaller than that of the first tendency, exists as the deviation tendency. In addition, the diagnostic mode setting step may include a positive diagnosis prohibiting step for prohibiting a positive diagnosis of the EGR mechanism when it is determined in the tendency determining step that the second tendency exists.

According to this construction, when the deviation tendency is the second tendency and this is taken into consideration along with the exhaust gas characteristics of the internal combustion engine, a positive diagnosis is prohibited from being made for the EGR mechanism when, for example, that tendency poses essentially no problem in terms of the deterioration of the exhaust gas such as an increase in the amount of NOx discharged. Accordingly, it is possible to avoid the original function of the EGR control system, which is to purify exhaust gas, being stopped or restricted due to unnecessary positive diagnoses being made.

According to the abnormality diagnostic method for the foregoing EGR control system, in the tendency determining step, the deviation tendency relating to the exhaust gas recirculation characteristics may be confirmed when it continues uniformly for a predetermined period of time.

According to this construction, even if the tendency of the exhaust gas recirculation characteristics to deviate from the reference characteristics changes over time, adverse effects such as an erroneous determination of that deviation tendency due to such a change over time can be avoided because that tendency is confirmed only when it continues uniformly for a predetermined period of time. Accordingly, the monitoring of that deviation tendency of the exhaust gas recirculation characteristics can be conducted with even greater reliability.

According to any one of the abnormality diagnostic methods for the EGR control system described above, in the monitoring step, the deviation tendency may be monitored when the internal combustion engine is in a stable idling state as the predetermined operating state of the engine.

According to this construction, the deviation tendency is monitored when the internal combustion engine is in the stable idling state, i.e., when combustion is stable and the intake air quantity and the intake air pressure and the like do not change much. Therefore, adverse effects from a change in the engine combustion state are avoided such that the monitoring of that tendency deviation is able to be conducted with even greater reliability.

BRIEF DESCRIPTION OF THE DRAWINGS

FIG. 1 is a block diagram schematically showing an EGR control system according to one exemplary embodiment of the invention, and a diesel engine to which that EGR control system has been applied;
FIG. 2 is a flowchart showing a routine for monitoring a tendency of exhaust gas recirculation characteristics of an exhaust gas recirculation system according to the one exemplary embodiment of the invention to deviate from reference characteristics thereof;
FIG. 3 is a graph showing the relationship between an actual intake air quantity and an amount of recirculated exhaust gas;
FIG. 4 is a graph showing the relationship between an opening driving command value for a flow control valve of the EGR control system and an actual opening of that flow control valve;
FIG. 5 is a flowchart showing a routine for diagnosing an abnormality in the EGR control system; and
FIG. 6 is a timing chart for explaining one example of execution of the abnormality diagnostic routine.

DETAILED DESCRIPTION OF THE PREFERRED EMBODIMENTS

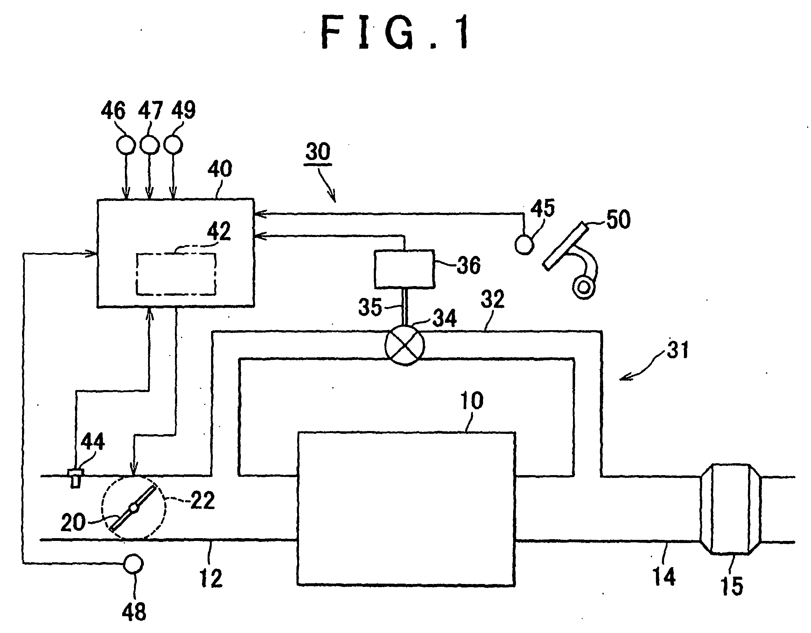

Hereinafter an exemplary embodiment of the invention will be described. FIG. 1 is a block view schematically showing an exhaust gas recirculation (hereinafter simply referred to as "EGR") control system for which an abnormality diagnostic is conducted according to this invention, and a diesel engine for a vehicle (hereinafter simply referred to as "engine") equipped with this EGR system.

The engine 10 is a so-called common rail diesel engine employing a common rail (not shown) that pressurizes fuel to a high pressure. In this engine 10, fuel is injected into cylinders (not shown) at a predetermined fuel injection pressure from fuel injection valves (not shown) connected to the common rail.

Referring to FIG. 1, an intake air passage 12 that supplies intake air to the cylinders is connected to the engine 10. In this intake air passage 12 is disposed a throttle valve 20 which regulates the intake air quantity according to the opening thereof. A throttle motor 22 is used to drive the throttle valve 20 to adjust that opening according to the operating state of the engine. Meanwhile, an exhaust gas passage 14 through which exhaust gas is discharged after combustion is also connected to the engine 10. In this exhaust gas passage 14 is disposed a NOx catalyst apparatus 15 to purify NOx contained in the exhaust gas.

Further, an EGR control system 30 is also provided with the engine 10 to inhibit the discharge of NOx by introducing some of the exhaust gas to the air-fuel mixture and thus reducing the combustion temperature. This EGR control system 30 largely comprises an EGR mechanism 31 for returning some of the exhaust gas to the intake passage, i.e., for exhaust gas recirculation, and an electronic control unit (hereinafter referred to as "ECU") 40 for controlling the amount of exhaust gas recirculated by the EGR mechanism 31. Further, the EGR mechanism 31 includes an EGR passage 32 which provides communication between the exhaust gas passage 14 and the intake air passage 12, a flow control valve 34 disposed midway in the EGR passage 32, and a vacuum control valve 36 for driving this flow control valve 34.

The upstream side of the EGR passage 32 is connected to the exhaust gas passage 14 and the downstream side of the EGR passage 32 is connected to the intake air passage 12 downstream of the throttle valve 20. Accordingly, some of the exhaust gas passing through the exhaust gas passage 14 is drawn into the EGR passage 32 by an intake air vacuum generated in an area downstream of the throttle valve 20. The exhaust gas drawn into the EGR passage 32 is then introduced into the intake air passage 12.

The opening of the flow control valve 34, which is a diaphragm type vacuum actuator, is adjusted according to the amount of vacuum in a vacuum introduction passage 35. The vacuum acting on the flow control valve 34 is adjusted by the vacuum control valve 36 connected to the vacuum introduction passage 35.

The ECU 40 integrally executes various controls of the engine 10, such as fuel injection timing control and intake air quantity control, in addition to the control relating to the amount of exhaust gas recirculated by the EGR control system 30. Also, various sensors are connected to the ECU 40, such as an intake air quantity sensor 44 provided in the intake air passage 12, an accelerator sensor 45 provided near an accelerator pedal 50 that detects a depression amount (i.e., accelerator opening) of that accelerator pedal 50, and an engine speed sensor 46 that detects an engine speed of the engine 10. In addition to these, various other sensors that detect the operating state of the engine and the running state of the vehicle are also connected to the ECU 40. Some of these sensors included a coolant sensor 47 that detects an engine coolant temperature, a throttle sensor 48 that detects an opening of the throttle valve 20 (i. e., a throttle opening), and a vehicle speed sensor 49. The ECU 40 appropriately reads the detection results of each of the sensors and executes the various controls such as the control relating to the amount of recirculated exhaust gas.

For example, the ECU 40 calculates an exhaust gas recirculation ratio (i.e., the ratio of amount of recirculated exhaust gas to the total amount of intake air) suitable for the current operating state of the engine based on the accelerator opening detected by the accelerator sensor 45, the engine speed detected by the engine speed sensor 46, and the engine coolant temperature detected by the coolant sensor 47, and the like. The ECU 40 then calculates a opening driving command value for the opening of the flow control valve 34 based on this exhaust gas recirculation ratio. Exhaust gas recirculation suitable for the operating state of the engine is then performed by controlling the opening of the flow control valve 34, i.e., controlling the amount of vacuum acting on the flow control valve 34 by the vacuum control valve 36, based on the opening driving command value. When the engine 10 shifts to an idling state, for example, the ECU 40 controls the flow control valve 34 so that it becomes substantially fully open (e.g., 75% to 100% open, with 100% being fully open). According to this control, the exhaust gas recirculation ratio is set larger than when the engine is operating under a high load so that a larger amount of exhaust gas is recirculated, which suppresses a rise in the combustion temperature, thereby inhibiting the discharge of NOx.

The ECU 40 is provided with a memory 42 for storing various programs to execute the various controls, function maps used during the execution of those programs, and various calculation results.

Next, an abnormality diagnostic method of the EGR control system 30 will be described in detail. This abnormality diagnostic method is designed to determine mechanical abnormalities in the EGR mechanism 31, i.e., the flow control valve 34 and the vacuum control valve 36, and the EGR passage 32, in particular.

As described above, the EGR control system 30 normally recirculates exhaust gas of an amount that is suitable for the operating state of the engine by controlling the opening of the flow control valve 34 by the ECU 40.

However, the exhaust gas recirculation characteristics of the EGR mechanism 31 deviate from reference characteristics thereof when, for example, the opening characteristic of the flow control valve 34 changes so that it is different from the original opening characteristic of the flow control valve 34 due to a change over time in the opening characteristic or a movable portion of the flow control valve 34 sticking, or when the cross-sectional area of the EGR passage 32 decreases due to particulate matter or the like in the exhaust gas adhering to the inside walls of the EGR passage 32. When the degree of deviation becomes large so that the amount of recirculated exhaust gas greatly differs from the amount suitable for the operating state of the engine, the amount of NOx or PM discharged increases.

In this exemplary embodiment, when the increase in the amount of NOx or PM discharged due to the exhaust gas recirculation characteristics of the EGR mechanism 31 deviating from the reference characteristics can no longer be ignored, this is diagnosed as an abnormality in the EGR control system 30.

The engine 10 equipped with the EGR control system 30 is, however, provided with the NOx catalyst apparatus 15 in the exhaust gas passage 14 for purifying the NOx. Therefore, even if the amount of recirculated exhaust gas is less than the amount suitable for the operating state of the engine, the NOx catalyst apparatus 15 tends to somewhat inhibit the increase in the amount of NOx discharged that arises when the amount of recirculated exhaust gas is insufficient. On the other hand, when the amount of recirculated exhaust gas exceeds the amount suitable for the operating state of the engine, there is a tendency for the amount of PM discharged to increase due to incomplete combustion. Accordingly, when determining the existence of an abnormality in the EGR control system 30, even if exhaust gas recirculation characteristics of the EGR control system 30 have deviated from the reference characteristics, it is considered practical to take into account whether there is a lack or an excess of recirculated exhaust gas caused by that deviation and determine whether that lack or excess is abnormal.

The abnormality diagnostic method of this exemplary embodiment considers the exhaust gas characteristics of the engine 10, and flexibly and appropriately determines whether there is an abnormality in the EGR control system 30, or more specifically, in the EGR mechanism 31, according to the exhaust gas characteristics. More specifically, when there is a tendency for the amount of recirculated exhaust gas from the EGR mechanism 31 to be insufficient, the condition for making a positive diagnosis (i.e., a diagnosis or determination that an abnormality exists) in the abnormality diagnostic is made more difficult to fulfill so that it is more difficult make a positive diagnosis. On the other hand, when this tendency does not exist, the condition for making a positive diagnosis is not made more difficult to fulfill and an abnormality diagnosis is made based on the usual condition. Therefore, when there is an excess of recirculated exhaust gas, for example, this is quickly diagnosed as an abnormality.

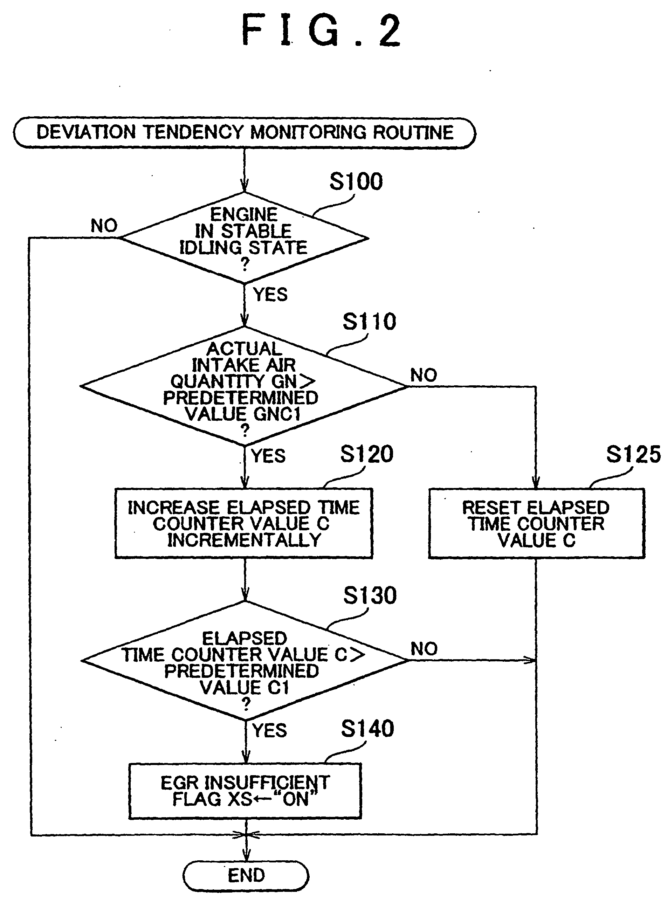

Hereinafter, the abnormality diagnostic method of the EGR control system according to the exemplary embodiment will be described with reference to FIGS. 2 to 6. FIG. 2 is a flowchart showing a routine for monitoring a tendency of the exhaust gas recirculation characteristics of the EGR mechanism 31 to deviate from the reference characteristics. The series of processes shown in FIG. 2 are executed repeatedly at predetermined cycles of time by the ECU 40.

In this routine, it is first determined whether the engine 10 is in a stable idling state (step S100). When the accelerator pedal 50 is not being depressed (i.e., when the accelerator opening is "0") and the amount of change over time in the engine speed is equal to, or less than, a predetermined amount, the engine 10 is determined as being in the stable idling state. If it is determined that the engine 10 is not in the stable idling state (i.e., NO in step S 100), the routine ends.

However, if it is determined that the engine 10 is in the stable idling state (i.e., YES in step S 100), the tendency of the exhaust gas recirculation characteristics of the EGR mechanism 31 to deviate from the reference characteristics is detected in the processes thereafter (steps S110 to S140). When the engine 10 is in the stable idling state, combustion is stable and there is not much change in the intake air quantity or the intake air pressure and the like. Therefore, by monitoring the deviation tendency when the engine 10 is in the stable idling state, it is possible to avoid adverse effects caused by a change in the combustion state.

When monitoring the deviation tendency, an actual intake air quantity GN is first calculated based on a detection result from the intake air quantity sensor 44. It is then determined whether this actual intake air quantity GN exceeds a predetermined value GNC 1 (step S 110).

As described above, when some of the exhaust gas is introduced into the intake air passage 12 when the EGR control system 30 is recirculating exhaust gas, the actual intake air quantity GN (or more precisely, the amount of fresh air detected by the intake air quantity sensor 44) changes. Here, the actual intake air quantity GN introduced into the cylinders of the engine 10 via the intake air passage 12 decreases as the amount of recirculated exhaust gas increases.

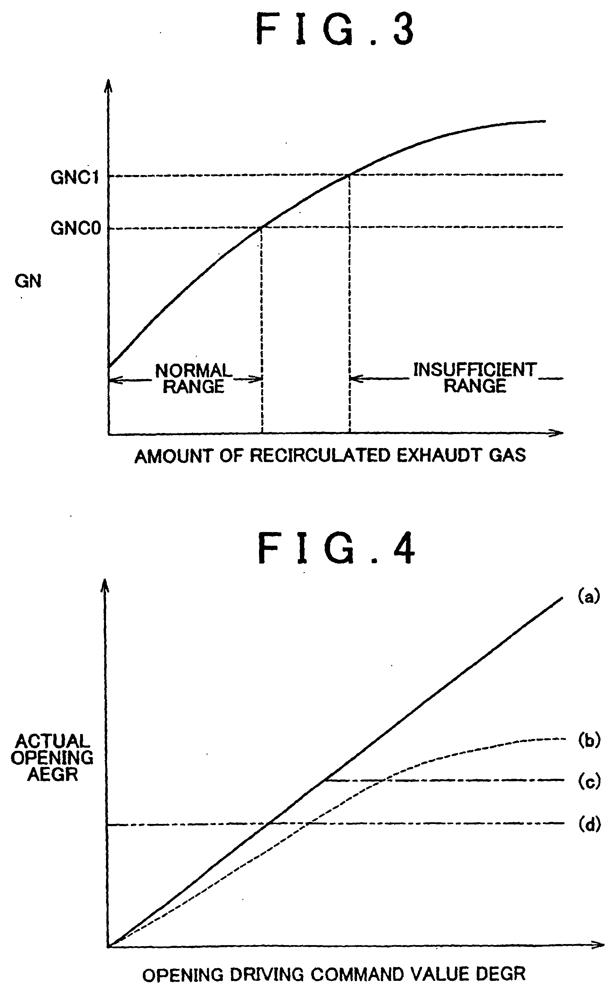

FIG. 3 shows the relationship between the actual intake air quantity GN and the amount of recirculated exhaust gas. In the drawing, a predetermined range (i.e., GN < GNC0) relating to the actual intake air quantity GN shows the range of the actual intake air quantity GN when the engine 10 is in the stable idling state. The reason that the actual intake air quantity GN is able to change within the predetermined range even when the engine 10 is in the stable idling state is because the value for stabilizing the engine speed changes according to the engine coolant temperature and the operating state of the air conditioner, for example, and the change in that value causes the actual intake air quantity GN to change accordingly. Even when this type of change in the actual intake air quantity GN is taken into consideration, however, the actual intake air quantity GN normally tends not to exceed the upper limit value GNC0 when the engine 10 is in the stable idling state. Accordingly, when the actual intake air quantity GN does exceed the upper limit value GNC0, it means that the amount of recirculated exhaust gas has become lower than the reference amount suitable for the idling state. As a result, it can be determined that the amount of recirculated exhaust gas is insufficient.

Hereinafter, a cause of this tendency for the amount of recirculated exhaust gas to be insufficient will be described. FIG. 4 shows the relationship between an opening driving command value DEGR output to the flow control valve 34 (or more precisely, output to the vacuum control valve 36 which determines the amount of the vacuum from the flow control valve 34) and an actual opening AEGR of the flow control valve 34. When the flow control valve 34 is operating normally, the actual opening AEGR of the flow control valve 34 is substantially linear from the increase in the opening driving command value DEGR, as shown by solid line (a) in the drawing.

In contrast, if a malfunction occurs in the flow control valve 34 or the vacuum control valve 36 and the relationship between the actual opening AEGR of the flow control valve 34 and the opening driving command value DEGR changes such that the actual opening AEGR drops below the opening that corresponds to the opening driving command value DEGR, as shown by broken line (b) in FIG. 4, the amount of recirculated exhaust gas becomes insufficient.

In addition, when the amount of recirculated exhaust gas is insufficient due to a malfunction in the flow control valve 34 or the vacuum control valve 36, it may be that the flow control valve 34 is not able to open to equal to, or greater than, a predetermined opening (shown by single dashed chain line (c) in FIG. 4), or it may be that the movable portion of the flow control valve 34 is stuck or the like so that the opening can not be changed (shown by double dashed chain line (d) in FIG. 4).

Further, aside from a malfunction in the flow control valve 34 or the vacuum control valve 36, the amount of recirculated exhaust gas can also become insufficient when the cross-sectional area of the EGR passage 32 is reduced due to particulate matter from the exhaust gas adhering to the passage walls, for example.

The predetermined value GNC1 is compared with the actual intake air quantity GN to determine whether the amount of recirculated exhaust gas is insufficient due to one or more of the various causes described above. According to the exemplary embodiment, not the upper limit value GNC0 itself of the actual intake air quantity GN, but the sum of the upper limit value GNC0 plus a predetermined extra amount $\alpha 1$ (i.e., GNC0 + $\alpha 1$) is set as the predetermined value GNC1. This predetermined value GNC1 is then compared with the actual intake air quantity GN to determine whether the amount of recirculated exhaust gas is insufficient.

The reason for adding the extra amount $\alpha 1$ is as follows. In the abnormality diagnostic method according to this exemplary embodiment, when there is a tendency for the amount of recirculated exhaust gas from the EGR mechanism 31 to be insufficient, the condition for making a positive diagnosis during the abnormality diagnostic is made more difficult to fulfill. However, this tendency only has meaning when the engine 10 is in the stable idling state. For example, if the operation state of the engine 10 changes, that tendency does not always continue.

For example, when the opening of the flow control valve 34 does not change at all from the predetermined opening, as shown by the double dashed chain line (d) in FIG. 4, even if the fixed opening is one that will lead to the amount of recirculated exhaust gas becoming insufficient in the idling range, when that opening is constantly maintained in other operating ranges, it can be assumed that this will lead to overall exhaust gas characteristics in which the amount of PM discharged will increase. Accordingly, even in this case, there is a fear that making the condition for making a positive diagnosis more difficult to fulfill will lead to a further increase in the amount of PM discharged.

Thus, in the abnormality diagnostic method according to this exemplary embodiment, the predetermined value GNC1 is obtained by adding the extra amount a to the upper limit value GNC0 of the intake air quantity when the engine 10 is in the stable idling state. Accordingly, in step S 110, supposing that the flow control valve 34 has become stuck, as described above, it can be determined that the amount of the recirculated exhaust gas is insufficient throughout the entire operating range until the increase in the amount of PM discharged is reduced to the point where it is negligible beyond a doubt. Also, it is preferable that the predetermined value GNC 1 be set flexibly based on the exhaust gas characteristics of the engine 10 that is equipped with the EGR control system 30. In this respect, it is also possible to set the predetermined value GNC 1 equal to the upper limit value GNC0, for example.

In step S 110, if it is determined that the actual intake air quantity GN exceeds the predetermined value GNC1 (i.e., YES in step S110), an elapsed time counter value C is increased in increments of a specific amount (step S120). This elapsed time counter value C is a counter value that is increased incrementally according to the amount of time elapsed from when it was determined that the amount of recirculated exhaust gas was less than the reference amount. Accordingly, it can be determined that the deviation tendency of the exhaust gas recirculation characteristics (in this case, the tendency for the amount of recirculated exhaust gas to be insufficient) is continuing as long as the elapsed time counter value C is increasing.

Then, it is determined whether the elapsed time counter value C exceeds a predetermined value C 1 (step S 130). If it is determined that the elapsed time counter value C exceeds the predetermined value C 1 (i.e., YES in step S130), an insufficient recirculated exhaust gas amount flag (hereinafter, referred to simply as "EGR insufficient flag") XS is set to "ON" and that setting is stored in the memory 42 (step S 140). This EGR insufficient flag XS indicates that the exhaust gas recirculation characteristics of the EGR mechanism 31 are such that there is a tendency of the amount of recirculated exhaust gas to be less than the reference amount. This deviation tendency is confirmed by the EGR insufficient flag XS being set to "ON" in step S 140.

When confirming the deviation tendency, the ECU 40 waits until the elapsed time counter value C exceeds the predetermined value C1, i.e., the ECU 40 waits for it to be continuously determined that the actual intake air quantity GN exceeds the predetermined value GNC 1 for a predetermined period of time after that determination has been made. As a result, even if the deviation tendency of the exhaust gas recirculation characteristics changes over time, adverse effects such as an erroneous determination of that deviation tendency due to such a change can be avoided.

On the other hand, in step S 110, if it is determined that the actual intake air quantity GN is equal to, or less than, the predetermined value GNC1 (i.e., NO in step S110), the elapsed time counter value C is set to "0" (step S 125). The routine then ends either after executing the process in step S125, or when it is determined in step S 130 that the elapsed time counter value C is equal to, or less than, the predetermined value C1 (i.e., NO in step S130).

In the routine described above, the tendency of the exhaust gas recirculation characteristics of the EGR mechanism 31 to deviate from the reference characteristics is monitored. When the amount of recirculated exhaust gas is insufficient so that the increase in the amount of PM discharged is negligible over the entire operating range of the engine 10, the EGR insufficient flag XS is set to "ON" and the deviation tendency then is determined by the monitoring.

Next, an abnormality diagnostic routine for determining whether there is an abnormality in the EGR mechanism 31 will be described. A diagnostic mode for the abnormality diagnostic is set based on the setting of the EGR insufficient flag XS, which is set in the deviation tendency monitoring routine described above. Further, the abnormality diagnostic of the EGR mechanism 31 is made based on that set diagnostic mode.

More specifically, when conducting the abnormality diagnostic, the opening driving command value DEGR of the flow control valve 34 is forcibly changed by a predetermined amount and an amount of change DGN (i.e., the entire amount changed from the start of forced driving) in the actual intake air quantity GN generated at that time is monitored. When that amount of change DGN in the actual intake air quantity GN is equal to, or less than, a predetermined abnormality determining value, it is determined that there is an abnormality in the EGR mechanism 31. Also, when the EGR insufficient flag XS is set to "ON", i.e., when the exhaust gas recirculation characteristics of the EGR mechanism 31 are such that there is a tendency for the amount of recirculated exhaust gas to be insufficient, the abnormality determining value changes to a smaller value, thus making the condition for making a positive diagnosis more difficult to fulfill.

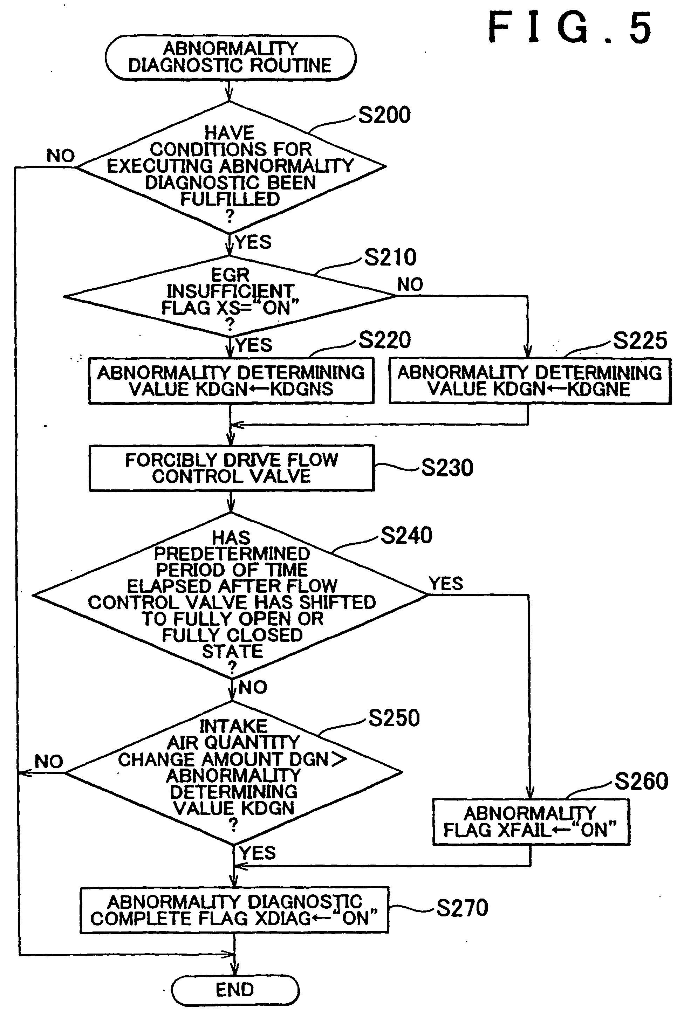

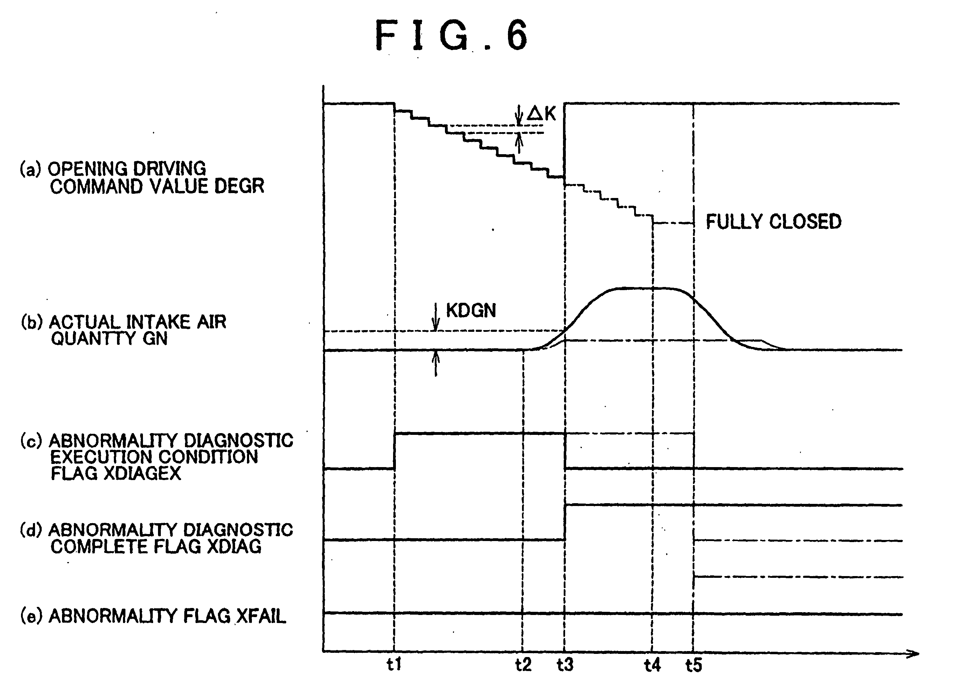

FIG. 5 is a flowchart showing an abnormality diagnostic routine. The processes in this routine shown in the flowchart are repeated at predetermined cycles of time by the ECU 40. FIG. 6 shows one example of change in the opening driving command value DEGR, the actual intake air quantity GN, an abnormality diagnostic execution flag XDIAGEX, and abnormality diagnostic complete flag XDIAG, and an abnormality flag XFAIL when the abnormality diagnostic routine shown in the flowchart is executed. In the drawing, the solid lines show the change in each of the values when there is no abnormality in the EGR mechanism 31 and the dashed lines show the change in each of the values when there is an abnormality in the EGR mechanism 31. Hereinafter, the abnormality diagnostic routine according to this exemplary embodiment will be described with reference to FIGS. 5 and 6.

In the routine, it is first determined whether a condition for executing the abnormality diagnostic has been fulfilled based on the setting of the abnormality diagnostic execution flag XDIAGEX (step S200 in FIG. 5). This abnormality diagnostic execution flag XDIAGEX is set to "ON" when the following conditions (A) through (E) have all been fulfilled, for example.

Condition (A): the vehicle is decelerating; condition (B); the amount of change in the engine speed is equal to, or less than, a specific value;

condition (C): the amount of change in the intake air quantity is equal to, or less than, a specific value; condition (D): the opening of the throttle valve 20 is equal to, or greater than, a predetermined opening; condition (E): the abnormality diagnostic complete flag XDIAG is "OFF".

More specifically, with respect to condition (A), it is determined that the vehicle is decelerating when the accelerator opening is "0" and the vehicle speed is equal to, or greater than, a predetermined speed. When the vehicle is decelerating, it is highly likely that fuel injection in the engine 10 is stopped, i.e., a fuel cut routine is being executed. When this fuel cut routine is executed and engine combustion effectively stops, even if the flow control valve 34 is forcibly driven when the abnormality diagnostic routine is executed and the amount of recirculated exhaust gas differs from the amount optimal for the operating state of the engine, it is possible to suppress deterioration in the exhaust gas from that difference. Therefore, the aforementioned condition (A) is made one of the conditions for executing the abnormality diagnostic in the abnormality diagnostic routine.

Also, a change in engine speed causes the intake air quantity to change. As a result, it is difficult to determine whether a change in the intake air quantity is due to a change in engine speed or whether it is due to forced driving of the flow control valve 34. This difficulty in determining the cause of the change in the intake air quantity when the engine speed is changing may lead to an erroneous determination. Therefore, the aforementioned condition (B) is also made one of the conditions for executing the abnormality diagnostic. Although there is some degree of correlation between the change in engine speed and the change in intake air quantity, they do not necessarily occur at the same time. That is, there are times when the intake air quantity changes due to a change in the engine speed, but there are also times when the engine speed changes due to a change in the intake air quantity. Therefore, in addition to condition (B), condition (C) is also made one of the conditions for executing the abnormality diagnostic.

Furthermore, when the opening of the throttle valve 20 is constricted so that the intake air quantity is extremely small, the change in the intake air quantity when the flow control valve 34 is forcibly driven temporarily decreases. Accordingly, when making the abnormality diagnosis based on such a slight change in the intake air quantity, the accuracy of that determination decreases and there is a possibility that an erroneous determination will be made. For this reason, the aforementioned condition (D) is made one of the conditions for executing the abnormality diagnostic.

Also, because the abnormality diagnostic is conducted when the flow control valve 34 is forcibly driven, when that diagnostic is being conducted, the amount of recirculated exhaust gas changes, if only temporarily, so that it differs from the amount optimal for the operating state of the engine. Therefore, it is preferable that the abnormality diagnostic be conducted in as short a time as possible and only when necessary. Therefore, in the abnormality diagnostic routine, by making condition (E) one of the conditions for executing the abnormality diagnostic, after confirming a positive diagnosis after engine startup, forced driving of the flow control valve 34 is immediately interrupted and the abnormality diagnostic routine is not executed again until the next engine startup. In this condition (E), the abnormality diagnostic complete flag XDIAG is reset to "OFF" when the engine is started, and is set to "ON" when a predetermined condition is fulfilled in the abnormality diagnostic routine.

When it is determined that the condition for executing the abnormality diagnostic is fulfilled in step S200, i.e., when the abnormality diagnostic execution flag XDIAGEX is set to "ON" (i.e., YES in step S200), it is then determined whether the EGR insufficient flag XS is set to "ON" (step S210). If the EGR insufficient flag XS is set to "ON" (i.e., YES in step S210), an abnormality determining value KDGN is set to equal a first value KDGNS which corresponds to a case in which the exhaust gas recirculation characteristics of the EGR mechanism 31 are such that there is a tendency for the amount of recirculated exhaust gas to be insufficient (step S220). On the other hand, if the EGR insufficient flag XS is set to "OFF" (i.e., NO in step S210), the abnormality determining value KDGN is set to a second value KDGNE which corresponds to a case in which there is not a tendency for the amount of recirculated exhaust gas from the EGR mechanism 31 to be insufficient (step S225). Here, the first value KDGNS and the second value KDGNE related to the abnormality determining value KDGN are set beforehand to have the relationship shown in relational expression (1) below.

$$KDGNS < KDGNE \tag{1}$$

When the abnormality determining value KDGN is set as described above, the flow control valve 34 is then forcibly driven (step S230; timing 1 in FIG. 6). More specifically, the current opening driving command value DEGR set based on the operating state of the engine is used as the initial opening driving command value. A predetermined gradual change amount $\Delta k$ is then added to this opening driving command value DEGR and the sum is then set as the new opening driving command value DEGR, as shown by operational expression (2) below.

$$[\text{opening driving command value DEGR}] \leftarrow [\text{current opening}$$

$$\text{driving command value DEGR}] + \Delta k \tag{2}$$

Here, the gradual change amount $\Delta k$ can be set to either a positive or negative value. For example, when the gradual change amount $\Delta k$ is a positive value, the opening driving command value DEGR gradually increases from the routine being repeatedly executed, and the opening of the flow control valve 34 also gradually increases due to that increase in the opening driving command value DEGR. Conversely, when the gradual change amount $\Delta k$ is a negative value, the opening driving command value DEGR gradually decreases, resulting in the opening of the flow control valve 34 also gradually decreasing. Accordingly, the flow control valve 34 is forcibly driven in stages as the opening driving command value DEGR changes by the gradual change amount $\Delta k$ in this way.

Here, whether the gradual change amount $\Delta k$ is set to a positive value or a negative value, i.e., whether the opening of the flow control valve 34 increases or decreases, is determined based on the opening of the flow control valve 34 when the forced driving is started. When the opening of the flow control valve 34 is greater than a predetermined opening $\beta$ (e.g., 50%), for example, when the flow control valve 34 is substantially fully open, the gradual change amount $\Delta k$ is set to a negative value so that the opening of the flow control valve 34 gradually decreases until the flow control valve 34 is fully closed. In contrast to this, when the opening of the flow control valve 34 is equal to, or less than, the predetermined opening β, for example, when the flow control valve 34 is substantially fully closed, the gradual change amount Δk is set to a positive value so that the opening of the flow control valve 34 gradually increases until the flow control valve 34 is fully open.

When the flow control valve 34 is forcibly driven, the abnormality determining value KDGN is set based on the minimum amount of change in the opening driving command value DEGR. That is, when changing the opening of the flow control valve 34 from the predetermined opening β to fully closed, the amount of change in the opening driving command value DEGR is the minimum value, but the abnormality determining value KDGN is set to equal to, or less than, the amount of change DGN in the actual intake air quantity GN generated at this time. When the flow control valve 34 is forcibly driven, because the opening driving command value DEGR is always changed by an amount equal to, or greater than, the minimum change amount thereof, the amount of change DGN in the actual intake air quantity GN will exceed the abnormality determining value KDGN unless there is no abnormality in the EGR mechanism 31.

Also, FIG. 6 shows an example of change in the opening driving command value DEGR when the opening driving command value DEGR gradually decreases due to the gradual change amount Δk being set to a negative value such that the opening of the flow control valve 34 changes to the fully closed side.

In this way, by forcibly driving the flow control valve 34, the actual intake air quantity GN starts to change gradually with a response delay after execution of this forced driving (timing t2).

After the flow control valve 34 has been forcibly driven, it is then determined whether a predetermined period of time has elapsed after the flow control valve 34 has reached the fully open state or the fully closed state (step S240). If the predetermined period of time has not yet elapsed (i.e., NO in step S240), it is then determined whether the amount of change DGN in the actual intake air quantity GN exceeds the abnormality determining value KDGN (step S250).

Here, if the amount of change DGN in the actual intake air quantity GN exceeds the abnormality determining value KDGN, the actual opening AEGR of the flow control valve 34 changes, causing the amount of recirculated exhaust gas to change, which in turn causes the actual intake air quantity GN to change by a predetermined amount (i.e., an amount equal to, or greater than, the abnormality determining value KDGN) corresponding to the change in the amount of recirculated exhaust gas. Accordingly, in this case, it is determined in the current abnormality diagnostic routine that an abnormality is not detected (YES in step S250). In this way, when it is determined by the abnormality diagnostic routine that an abnormality is not detected, the abnormality diagnostic complete flag XDIAG is set to "ON" (step S270).

Then, in this case, the condition (E) is no longer fulfilled, which results in the condition for making a positive diagnosis no longer being fulfilled (i.e., abnormality diagnostic execution flag XDIAGEX is turned "OFF") (i.e., NO in step S200) so the routine ends. That is, in this case, because at least the abnormality diagnostic was conducted and a meaningful diagnosis was obtained, it is determined that it is unnecessary to continue with the processes thereafter in the abnormality diagnostic, so the routine ends. Accordingly, even if the flow control valve 34 has not yet reached a fully open or fully closed state, i.e., even if the forced driving of the flow control valve 34 is not yet complete, the forced driving is immediately interrupted and the abnormality diagnostic routine is no longer executed until the next engine startup. As a result, the abnormality diagnostic routine following the forced driving of the flow control valve 34 is executed for as short as time as possible and only when necessary.

On the other hand, when it is determined in step S240 that the predetermined period of time has elapsed after the flow control valve 34 has reached the fully open or fully closed state (i.e., YES in step S240), it means that the flow control valve 34 has been forcibly driven to the fully open or fully closed state, and further, that a predetermined period of time (i.e., timing t4 to t5) has elapsed thereafter. Then, regardless of this fact, because either the actual intake air quantity GN does not change, or if it does change, the amount of change DGN does not reach an amount corresponding to the change in the amount of recirculated exhaust gas, it should be diagnosed as an abnormality so the abnormality flag XFAIL is set to "ON" (step S260). When the abnormality flag XFAIL is turned on, the abnormality diagnostic complete flag XDIAG is then set to "ON" (step S270; timing t5). There is a predetermined response delay from after the flow control valve 34 is forcibly driven until it appears as a change in the actual intake air quantity GN. Therefore, the ECU 40 waits for the abnormality flag XFAIL to be operated, i.e., waits for a positive diagnosis to be made, after the flow control valve 34 shifts to the fully open or fully closed state until the predetermined period of time passes.

In this way, after the abnormality diagnostic complete flag XDIAG is set to "ON" in step S270, or when it is determined in step S250 that the amount of change DGN is equal to, or less than, the abnormality determining value KDGN (i.e., NO in step S250), the routine ends.

The foregoing aspect of the exemplary embodiment for conducting an abnormality diagnostic of the EGR mechanism 31 enables the following effects to be obtained. According to the exemplary embodiment, when determining whether there is an abnormality in the EGR mechanism 31, the ECU 40 monitors whether there is a tendency for the exhaust gas recirculation characteristics of the EGR mechanism 31 to deviate from the reference characteristics thereof, or more specifically, whether there is a tendency for the amount of recirculated exhaust gas to be insufficient, when the engine 10 is in a stable idling state. The diagnostic mode for the abnormality diagnostic of the EGR mechanism 31 is set based on the deviation tendency of the monitored exhaust gas recirculation characteristics. Accordingly, it is

**EP 1 365 139 B1**

also possible to set the diagnostic mode for the abnormality diagnostic also considering both the deviation tendency of exhaust gas recirculation characteristics obtained in advance, as well as the exhaust gas characteristics of the engine 10. Because the abnormality diagnostic of the EGR mechanism 31 is conducted based on the set diagnostic mode, it is possible to determine, both flexibly and appropriately, whether an abnormality exists according to the exhaust gas characteristics.

Further, the amount of change DGN in the actual intake air quantity GN is compared with the abnormality determining value KDGN. If the amount of change DGN must be equal to, or less than, the abnormality determining value KDGN, a positive diagnosis is made. Then, this condition for making a positive diagnosis (or more specifically, the abnormality determining value KDGN) is set variably based on whether there is a tendency for the amount of the recirculated exhaust gas of the EGR mechanism 31 to be insufficient. Accordingly, the condition for making a positive diagnosis in the abnormality diagnostic can be set suitably according to the tendency of the amount of recirculated exhaust gas to be insufficient, so it is possible to determine, both flexibly and appropriately, whether an abnormality in the EGR control system 30 exists according to the exhaust gas characteristics.

In particular, because the engine 10 is provided with the NOx catalyst apparatus 15 in the exhaust gas passage 14, even if the amount of recirculated exhaust gas is insufficient, the engine 10 has exhaust gas characteristics in which an increase in the amount of NOx discharged as a result of the amount of recirculated exhaust gas being insufficient is limited to a range where it can essentially be ignored. Considering this, according to an abnormality diagnostic method according to the exemplary embodiment, when there is a tendency for the amount of recirculated exhaust gas from the EGR mechanism 31 to be insufficient, the abnormality determining value KDGN is set equal to the first value KDGNS, thereby making the condition for making a positive diagnosis in the abnormality diagnostic more difficult to fulfill. Accordingly in this case, a positive diagnosis can be made more appropriately so excessive positive diagnoses can be avoided.

On the other hand, when the amount of exhaust gas actually recirculated is not less than normal, the condition for making a positive diagnosis in the abnormality diagnostic is not made more difficult to fulfill and the abnormality determining value KDGN is set to equal the second value KDGNE which is larger than the first value KDGNS. Accordingly in this case, it is possible to quickly detect an abnormality and inhibit an increase in the amount of PM discharged.

Also, the predetermined value GNC1 set corresponding to the stable idling state is compared with the actual intake air quantity GN, and it is determined, based on the fact that the actual intake air quantity GN exceeds the predetermined value GNC1, that there is a tendency for the amount of recirculated exhaust gas to be insufficient. In this way, by detecting, based on the intake air quantity, that there is a tendency for the amount of the recirculated exhaust gas to be insufficient, that tendency can be determined relatively easily. Furthermore, the intake air quantity sensor 44, which is used when detecting the actual intake air quantity GN, is also used in the intake air quantity control and other controls in the engine 10 when conducting the abnormality diagnostic. As a result, the construction does not become complicated, as it does in the case where a flow sensor that detects the actual amount of recirculated exhaust gas is provided separately.

Moreover, when conducting the abnormality diagnostic, the EGR mechanism 31 is forcibly driven and the abnormality determining value KDGN set based on the amount of change in the opening driving command value DEGR at that time is compared with the amount of change DGN in the actual intake air quantity GN. When the amount of change DGN is equal to, or less than, the abnormality determining value KDGN, it is determined that there is an abnormality. By comparing the amounts of change in the opening driving command value DEGR and the actual intake air quantity GN in this way, even if there were individual differences in the exhaust gas recirculation characteristics of the EGR mechanism 31, these individual differences would cancel each other out when employing this abnormality diagnostic method. Accordingly, effects from these individual differences can be avoided such that an accurate abnormality diagnosis can be made.

By gradually changing the opening driving command value DEGR by the predetermined gradual change amount Δk, the forced driving of the flow control valve 34 is divided into a plurality of stages. In each stage, the amount of change DGN in the actual intake air quantity GN and the abnormality determining value KDGN are compared. When a meaningful diagnosis is made in which an abnormality has not been detected in the current abnormality diagnostic, the forced driving of the flow control valve 34 is immediately interrupted by stopping the opening driving command value DEGR from changing in stages thereafter. Accordingly, the abnormality diagnostic routine that accompanies forced driving of the flow control valve 34 is executed for as short a time as possible and only when necessary. As a result, it is possible to avoid the forced driving being executed for longer than is necessary so that the period of time during which recirculated exhaust gas that is not suitable for the operating state of the engine is able to be limited to as short as possible.

In particular, according to the exemplary embodiment, the condition for making a positive diagnosis is made more difficult to fulfill when there is a tendency for the amount of recirculated exhaust gas to be insufficient. Accordingly, when there is a tendency for the amount of recirculated exhaust gas to be insufficient, but that insufficiency is small so that it is not necessary to detect it as an abnormality, the abnormality diagnostic routine is able to be ended quickly

14

so that the forced driving of the flow control valve 34 is able to be interrupted very early on. Accordingly, the foregoing effect is able to be made even more remarkable.

Also, the ECU 40 waits to set the EGR insufficient flag XS to "ON", i.e., waits to confirm the tendency for the amount of recirculated exhaust gas to be insufficient, until a predetermined period of time has elapsed after it has been determined that the actual intake air quantity GN exceeds the predetermined value GNC1. Therefore, even if the deviation tendency of the exhaust gas recirculation characteristics changes over time, adverse effects such as an erroneous determination of that deviation tendency due to such a change can be avoided. Accordingly, the monitoring of that deviation tendency of the exhaust gas recirculation characteristics can be conducted with even greater reliability.

When the engine 10 is in the stable idling state, the deviation tendency of the exhaust gas recirculation characteristics, or more specifically, whether or not there is a tendency for the amount of recirculated exhaust gas to be insufficient, is monitored. Accordingly, that monitoring is conducted when combustion is stable and the intake air quantity does not change much. Therefore, adverse effects from a change in the engine combustion state are avoided so the monitoring is able to be conducted with even greater reliability.

In addition, another condition for executing the abnormality diagnostic is that vehicle be decelerating, so the abnormality diagnostic is executed as a fuel cut routine is executed. Therefore, even if the flow control valve 34 is forcibly driven such that the amount of recirculated exhaust gas changes so that it differs from the amount optimal for the operating state of the engine, deterioration of the exhaust gas emissions due to that change is able to be suppressed to as great an extent as possible.

Further, another condition for executing the abnormality diagnostic is that opening of the throttle valve 20 be equal to, or greater than, a predetermined opening, such that the abnormality diagnostic is not executed when the opening of the throttle valve 20 is constricted so that the intake air quantity is extremely small. That is, the abnormality diagnostic is not executed when the change in the intake air quantity when the flow control valve 34 is forcibly driven is small and there is a possibility that an erroneous diagnosis may be made if the abnormality diagnosis is made based on such a small change. Accordingly, erroneous diagnoses are able to be avoided so the abnormality diagnosis is able to be made even more accurately.

While the invention was described with reference to a specific exemplary embodiment thereof, the construction and control configuration of that exemplary embodiment may also be modified as follows. According to the exemplary embodiment, whether or not there is a tendency for the amount of recirculated exhaust gas from the EGR mechanism 31 to be insufficient is determined based on determination results of the actual intake air quantity GN detected by the intake air quantity sensor 44 and the predetermined value GNC1. Alternatively, however, that determination may also be made based on the intake air pressure.

That is, when the amount of recirculated exhaust gas is insufficient, the amount of increase in the intake air pressure from recirculation of the exhaust gas decreases. As a result, the intake air pressure also decreases to lower than when the EGR mechanism 31 is operating normally. Therefore, it is possible to determine that there is a tendency for the amount of recirculated exhaust gas to be insufficient when the actual intake air pressure is less than the predetermined value. Then, the EGR mechanism 31 is forcibly driven and the amount of change in the actual intake air pressure is compared with the abnormality determining value for the intake air pressure that is set based on the amount of change in the opening driving command value DEGR when the EGR mechanism 31 is forcibly driven. An abnormality is determined to exist when that amount of change is equal to, or less than, the abnormality determining value. Further, the abnormality determining value is set lower so that it is more difficult to make a positive diagnosis (i.e., a determination that an abnormality exists) when is has been determined based on the intake air pressure that there is a tendency for the amount of recirculated exhaust gas to be insufficient. On the other hand, when it has been determined that the amount of recirculated exhaust gas does not tend to be insufficient, the condition for making a positive diagnosis is not made more difficult to fulfill so an abnormality in the EGR mechanism 31 is determined quickly.

In the foregoing exemplary embodiment and the modified example thereof, whether or not there is a tendency for the amount of recirculated exhaust gas to be insufficient is monitored based on the intake air quantity or the intake air pressure. When that tendency has been determined to exist, the condition for making a positive diagnosis is made more difficult to fulfill. Conversely, whether or not there is a tendency for the amount of recirculated exhaust gas to be excessive may be monitored and the condition for making a positive diagnosis may be made more difficult to fulfill when that tendency has been determined to exist.

When making the condition for making a positive diagnosis more difficult to fulfill based on the tendency of the amount of recirculated exhaust gas to be excessive, a portion of the abnormality diagnostic routine in the flowcharts shown in FIGS. 2 and 3 is modified as follows.

More specifically, in step S110 shown in FIG. 2 it is determined whether the actual intake air quantity GN has shifted so that it is less than the predetermined value. When a predetermined period of time has elapsed after the actual intake air quantity GN has made that shift (i.e., YES in step S130), an excessive recirculated exhaust gas amount flag (hereinafter, referred to simply as "EGR excessive flag") is set to "ON" (step S140).

Also, when monitoring whether there is a tendency for the amount of recirculated exhaust gas to be excessive based on the intake air pressure, it is determined in step S110 shown in FIG. 2 whether the actual intake air pressure has shifted so as to exceed the predetermined value. When a predetermined period of time has elapsed after the actual intake air pressure has made that shift (i.e., YES in step S130), the EGR excessive flag is set to "ON" (step S140).

Then, when the EGR excessive flag is set to "ON" in step S210 in FIG. 5 (i.e., ON in step S210), the abnormality determining value is set to a value larger than normal (step S220).

According to this construction, even if the amount of the recirculated exhaust gas is excessive, when determining whether there is an abnormality in the EGR control system in the engine having exhaust gas characteristics in which the increase in the amount of PM discharged due to the excessive amount of recirculated exhaust gas is kept within a range that can essentially be ignored, excessive positive diagnoses are able to be avoided while appropriate positive diagnoses are able to be made. On the other hand, when there is not a tendency for the actual amount of recirculated exhaust gas to be greater than normal, the condition for making a positive diagnosis is not made more difficult to fulfill, so an abnormality can be detected quickly and the increase in the amount of NOx discharged can be inhibited. In an engine having a so-called PM filter, which traps PM in the exhaust gas and removes it via combustion, in the exhaust system, the amount of PM discharged tends to decrease due to the function of the filter. Accordingly, the abnormality diagnostic method described above is effective in flexibly and appropriately determining whether an abnormality exists in the EGR control system of the engine.

In the foregoing exemplary embodiment and the modified example thereof, the deviation tendency in the amount of recirculated exhaust gas is monitored on the condition that the engine 10 is in the stable idling state. Alternatively, however, that deviation tendency may also be monitored on the condition that the operating state of the engine 10 is stable and steady, i.e., when the engine 10 is operating in a state where the intake air quantity and the intake air pressure can be regarded as being substantially constant, such as when the vehicle is running at low speeds.

In the foregoing exemplary embodiment and the modified example thereof, the actual intake air quantity or the amount of change in the intake air pressure are compared with the respective predetermined value and it is determined whether there is a tendency for the amount of recirculated exhaust gas to be insufficient or excessive. The condition for making a positive diagnosis is then made more difficult to fulfill based on that result. In addition to a process to make the condition for making a positive diagnosis more difficult to fulfill, a process to inhibit a positive diagnosis from being made may also be executed as described below.

That is, even if it is determined that there is a tendency for the amount of the recirculated exhaust gas to be insufficient or excessive by comparing the amount of change in the actual intake air quantity or intake air pressure with the respective predetermined value, the positive diagnosis itself may also be prohibited when it is determined that the tendency is small.

According to this construction, a positive diagnosis is prohibited from being made for the EGR mechanism 31 when the extent of the deterioration of the exhaust gas caused by a tendency of the amount of recirculated exhaust gas to be either insufficient or excessive poses essentially no problem. Accordingly, it is possible to avoid the original function of the EGR control system, which is to purify exhaust gas, from being stopped or restricted due to unnecessary positive diagnoses being made.

When the actual intake air quantity GN is less than the predetermined value GNC1 but exceeds the upper limit value GNC0 of the actual intake air quantity GN, it can be determined that there is a tendency for the amount of the recirculated exhaust gas to be insufficient. Further, when there is a tendency for the amount of the recirculated exhaust gas to be excessive, it can be determined that the degree of that tendency is small when the actual intake air quantity GN is less than a lower limit value corresponding to the stable idling state but the degree of deviation from that lower limit value is small. Also, with the intake air pressure, as well, the same determination can be made by the same method, with the exception of the point where the tendency for the amount of recirculated exhaust gas to be insufficient increases the lower the intake air pressure.

Furthermore, when prohibiting a positive diagnosis from being made, in addition to prohibiting the diagnostic process itself by setting the abnormality diagnostic execution flag XDIAGEX to "OFF" for example, it is also possible to employ a method such as setting the abnormality determining value extremely low, for example so that a positive diagnosis will effectively not be made.

In the foregoing exemplary embodiment and the modified example thereof, the elapsed time counter value C is increased by a specific increment in step S120 in FIG. 2. For example, the amount of the increment may also be set according to the degree of deviation of the actual intake air quantity or the actual intake air pressure from the respective predetermined value. For example, taking an example in which the tendency for the amount of the recirculated exhaust gas to be insufficient is monitored, the amount of the increment is set larger the more the actual air intake quantity exceeds the predetermined value, for example. Similarly, the amount of the increment is set larger the more the actual intake air pressure falls below the predetermined value. In this way, by increasing the amount of the increment the larger the degree of the deviation, it is possible to appropriately and quickly detect the tendency of the amount of recirculated exhaust gas to be insufficient or excessive according to those tendencies.

In the foregoing exemplary embodiment and the modified example thereof, an example was given regarding the abnormality diagnostic method of the EGR control system 30 mounted in the engine 10 having the NOx catalyst apparatus 15. However, the object to which the abnormality diagnostic method according to the invention is applied is by no means limited to an engine provided with the NOx catalyst apparatus 15, for example. The object of the abnormality diagnostic may, for example, also be the EGR control system mounted in an engine provided with a PM filter in the exhaust system. Furthermore, the EGR system which is the object of the abnormality diagnostic is not limited to being mounted in a diesel engine, but may also be mounted in an in-cylinder injection type gasoline engine in which fuel is directly injected into the combustion chamber, or other type of internal combustion engine.

The effects of the technical concepts of the exemplary embodiment and the modified example thereof described above are as follows. (a) According to the abnormality diagnostic method of the EGR control system according to the foregoing construction, the monitoring step includes a tendency determining step for comparing the actual amount of recirculated exhaust gas with the predetermined value and determining that a third tendency, in which the actual amount of recirculated exhaust gas exceeds the predetermined value, exists as the deviation tendency, and the positive diagnosis condition varying step includes a condition tightening step for tightening the condition for making a positive diagnosis (i.e., making the condition more difficult to fulfill) such that it is more difficult to make a positive diagnosis (i.e., a diagnosis or determination that an abnormality exists) when it has been determined in the determination step that the third tendency exits.

According to this construction, the actual amount of recirculated exhaust gas is first compared with the predetermined value set based on the predetermined operating state of the engine, and it is then determined based on that comparison whether there is a tendency (i.e., the third tendency) for the actual amount of recirculated exhaust gas to exceed the predetermined value (i.e., the tendency determining step). Here, when there is a tendency for the actual amount of recirculated exhaust gas to exceed the predetermined value, it can be determined that the actual amount of recirculated exhaust gas is greater than the reference amount of the EGR mechanism that is appropriate for the predetermined operating state of the engine. Accordingly, when a positive diagnosis is made (i.e., when it is determined that an abnormality exists) based on that determination, it can be considered an abnormality in which the actual amount of recirculated exhaust gas from the EGR mechanism is excessive.

According to this construction, when there is a tendency for the actual amount of the recirculated exhaust gas to exceed the predetermined value, the condition for making a positive diagnosis when conducting the abnormality diagnostic is made more difficult to fulfill so that it is more difficult to make a positive diagnosis (i.e., the condition tightening step). Accordingly, even if the amount of recirculated exhaust gas is excessive, in an engine having exhaust gas characteristics in which an increase in the amount of PM discharged due to that excessive amount of recirculated exhaust gas is kept within a range in which it can essentially be ignored, excessive positive diagnoses can be avoided so that abnormalities can be diagnosed appropriately when diagnosing an abnormality in the EGR control system. On the other hand, when there is not a tendency for the actual amount of recirculated exhaust gas to be greater than normal, the condition for making a positive diagnosis is not made more difficult to fulfill, so an abnormality can be detected quickly and an increase in the amount of NOx discharged can be inhibited.

In the invention described in (a) above, for example, the condition for making a positive diagnosis when determining whether an abnormality exists may also be set, in advance, so that it is more difficult for a positive diagnosis to be made, and changed to make it easier to make a positive diagnosis when it has been determined that a tendency in which the actual amount of recirculated exhaust gas falls below the predetermined value exists as the deviation tendency, with effectively the same results. That is, with this construction as well, effects similar to those of the invention described in (a) above are able to be obtained.

(b) According to the abnormality diagnostic method of an EGR control system described in (a) above, in the tendency determining step, the actual intake air quantity when the internal combustion engine is in the predetermined operating state and a predetermined value set based on the predetermined operating state of the engine are compared, and it is determined that the third tendency exists when the actual intake air quantity is below the predetermined value.

(c) According to the abnormality diagnostic method of an EGR control system described in (b) above, the abnormality diagnostic executing step includes a forced driving step for forcibly driving the EGR mechanism by forcibly changing a driving command value, and a positive diagnosis determining step for determining that there is an abnormality in the EGR mechanism when the amount of change in the actual intake air quantity generated by that forced driving is equal to, or less than, a predetermined determining value set based on the amount of change in the driving command value. In addition, the condition tightening step includes a step for changing the predetermined determining value so as to become smaller when it has been determined in the tendency determining step that the third tendency exists than when it has been determined in the tendency determining step that the third tendency does not exist.

(d) According to the abnormality diagnostic method of an EGR control system described in (c) above, the forced driving step includes a step for gradually changing the driving command value in order to perform the forced driving in a plurality of stages when forcibly driving the EGR mechanism. In addition, the abnormality diagnostic executing step includes a step for interrupting forced driving of the EGR mechanism by stopping the driving command value from changing in a stage after the presence or absence of an abnormality in the EGR mechanism has been determined based on the comparison between the predetermined determining value and the amount of change in the actual intake air quantity.

(e) According to the abnormality diagnostic method of an EGR control system described in (a) above, in the tendency determining step, the actual intake air pressure when the internal combustion engine is in the predetermined operating state is compared with the predetermined value set based on that predetermined operating state of the engine, and it is determined that the third tendency exists when the actual intake air pressure exceeds the predetermined value.

(f) According to the abnormality diagnostic method of an EGR control system described in (e) above, the abnormality diagnostic executing step includes a forced driving step for forcibly driving the EGR mechanism by forcibly changing a driving command value, and a positive diagnosis determining step for determining that there is an abnormality in the EGR mechanism when the amount of change in the actual intake air pressure generated by that forced driving is equal to, or less than, a predetermined determining value set based on the amount of change in the driving command value. In addition, the condition tightening step includes a step for changing the predetermined determining value so as to become smaller when it has been determined in the tendency determining step that the third tendency exists than when it has been determined in the tendency determining step that the third tendency does not exist.

(g) According to the abnormality diagnostic method of an EGR control system described in (f) above, the forced driving step includes a step for gradually changing the driving command value in order to perform the forced driving in a plurality of stages when forcibly driving the EGR mechanism. In addition, the abnormality diagnostic executing step includes a step for interrupting forced driving of the EGR mechanism by stopping the driving command value from changing in a stage after the presence or absence of an abnormality in the EGR mechanism has been determined based on a comparison between the predetermined determining value and the amount of change in the actual intake air pressure.

According to the constructions in (b) through (g) above, the characteristic that exists between either the intake air quantity and the amount of the recirculated exhaust gas or the intake air pressure and the amount of recirculated exhaust gas is used. Therefore, it is possible to determine relatively easily that the third tendency exists based either on the fact that the actual intake air quantity is below the predetermined value set based on the predetermined operating state of the engine, or on the fact that the actual intake air pressure exceeds the predetermined value set based on the predetermined operating state of the engine.

Also, according to the constructions in (c) or (f) above, the abnormality diagnostic is not performed based on a uniform condition for making a positive diagnosis; rather, the condition for a making positive diagnosis is made more difficult to fulfill when there is a tendency for the actual amount of the recirculated exhaust gas to be excessive. More specifically, the determining value is set smaller when determining whether an abnormality exists based on either a determination that the actual intake air quantity during the predetermined operating state of the engine is below the predetermined value, or a determination that the actual intake air pressure during the predetermined operating state of the engine exceeds the predetermined value. Therefore, even if the actual amount of recirculated exhaust gas corresponding to the amount of change in the driving command value exceeds the original reference value of the EGR mechanism, it is not diagnosed as an abnormality when that tendency is slight.

Accordingly, even if the condition for making a positive diagnosis is made more difficult to fulfill and the actual amount of recirculated exhaust gas is excessive, when the engine has exhaust gas characteristics in which the increase in the amount of PM discharged due to the excessive amount of recirculated exhaust gas is kept within a range that can essentially be ignored, excessive positive diagnoses are able to be avoided. On the other hand, when there is not a tendency for the actual amount of recirculated exhaust gas to be excessive, the condition for making a positive diagnosis is not made more difficult to fulfill, so the abnormality can be detected quickly and the increase in the amount of NOx discharged can be inhibited.

Furthermore, according to the constructions in (d) or (g) above, by gradually changing the amount of changing in the driving command value of the EGR mechanism, the forced driving of the EGR mechanism is performed in a plurality of stages. Then, when it has been determined that no abnormality exists in the EGR mechanism in any of the plurality of stages, the forced driving of the EGR mechanism is interrupted by stopping the driving command value from changing in the stages thereafter. Accordingly, it is possible to avoid forcibly driving the EGR mechanism for longer than necessary such that the period during which exhaust gas recirculation not suitably for the operating state of the engine can be made as short as possible.

(h) According to the abnormality diagnostic method of an EGR control system described in any one of (a) through (g) above, in the tendency determining step, it is further determined whether a fourth tendency, in which the degree thereof is smaller than that of the third tendency, exists as the deviation tendency. In addition, the diagnostic mode setting step includes a positive diagnosis prohibiting step for prohibiting a positive diagnosis of the EGR mechanism when it is determined in the tendency determining step that the fourth tendency exists.

According to the foregoing construction, when the deviation tendency is the fourth tendency and this is taken into consideration along with the exhaust gas characteristics of the internal combustion engine, a positive diagnosis is prohibited from being made for the EGR mechanism when, for example, that tendency poses no problem in terms of the deterioration of the exhaust gas such as an increase in the amount of PM discharged. Accordingly, it is possible to avoid the original function of the EGR control system, which is to purify exhaust gas, from being stopped or restricted due to unnecessary positive diagnoses being made.

**Claims**

1. An abnormality diagnostic method for an exhaust gas recirculation control system (30) provided with an exhaust gas recirculation mechanism (31) that returns some of an exhaust gas flowing through an exhaust gas passage (14) of an internal combustion engine (10) to an intake air passage (12), the exhaust gas recirculation control system (30) controlling an amount of recirculated exhaust gas by driving the exhaust gas recirculation mechanism (31) based on an operating state of the engine (10), the abnormality diagnostic method comprising:

   a monitoring step for monitoring a tendency of exhaust gas recirculation characteristics of the exhaust gas recirculation mechanism (31) when the internal combustion engine (10) is in a predetermined operating state to deviate from reference characteristics thereof before conducting an abnormality diagnostic of the exhaust gas recirculation mechanism (31), wherein the monitoring step includes a step for obtaining the deviation tendency of the exhaust gas recirculation characteristics of the exhaust gas recirculation mechanism (31) based on results of a comparison between an actual amount of recirculated exhaust gas and a predetermined value set based on the predetermined operating state of the engine (10);
   a diagnostic mode setting step for setting a diagnostic mode for the abnormality diagnostic of the exhaust gas recirculation mechanism (31), based on the monitored deviation tendency of the exhaust gas recirculation characteristics, wherein the diagnostic mode setting step includes a positive diagnosis condition varying step for variably setting, based on the results of the comparison between the actual amount of recirculated exhaust gas and the predetermined value obtained in the monitoring step, a condition for making a positive diagnosis for determining in the abnormality diagnostic executing step that there is an abnormality in the exhaust gas recirculation mechanism (31); and
   an abnormality diagnostic executing step for executing the abnormality diagnostic based on the set diagnostic mode, **characterized in that**
   the monitoring step includes a tendency determining step for comparing the actual amount of recirculated exhaust gas with the predetermined value and determining whether a first tendency, in which the actual amount of recirculated exhaust gas is below the predetermined value, exists as the deviation tendency, and
   the positive diagnosis condition varying step includes a condition tightening step for making a condition for making a positive diagnosis more difficult to be fulfilled so that it is more difficult for a positive diagnosis to be made when it is determined in the tendency determining step that the first tendency exists.

2. The abnormality diagnostic method according to claim 1, **characterized in that,** in the tendency determining step, the actual intake air quantity when the internal combustion engine (10) is in the predetermined operating state is compared with the predetermined value set based on the predetermined operating state of the engine (10), and it is determined that the first tendency exists when the actual intake air quantity exceeds the predetermined value.

3. The abnormality diagnostic method according to claim 2, **characterized in that:**

   the abnormality diagnostic executing step includes a forced driving step for forcibly driving the exhaust gas recirculation mechanism (31) by forcibly changing a driving command value which drives the exhaust gas recirculation mechanism (31), and a positive diagnosis determining step for determining that there is an abnormality in the exhaust gas recirculation mechanism (31) when an amount of change in the actual intake air quantity generated by that forced driving is equal to, or less than, a predetermined determining value set based on an amount of change in the driving command value, and
   the condition tightening step includes a step for changing the predetermined determining value so as to become smaller when it has been determined in the tendency determining step that the first tendency exists than when it has been determined in the tendency determining step that the first tendency does not exist.

4. The abnormality diagnostic method according to claim 3, **characterised in that:**

   the forced driving step includes a step for gradually changing the driving command value in order to perform the forced driving in a plurality of stages when forcibly driving the exhaust gas recirculation mechanism (31), and the abnormality diagnostic executing step includes a step for interrupting the forced driving of the exhaust gas recirculation mechanism (31) by stopping the driving command value from changing in a stage after the presence or absence of an abnormality in the exhaust gas recirculation mechanism (31) has been determined based on the comparison between the predetermined determining value and the amount of change in the actual intake air quantity.

5.  The abnormality diagnostic method according to claim 1, **characterised in that,** in the tendency determining step, an actual intake air pressure when the internal combustion engine (10) is in the predetermined operating state is compared with a predetermined value set based on that predetermined operating state of the engine (10), and it is determined that the first tendency exists when the actual intake air pressure is below the predetermined value.

6.  The abnormality diagnostic method according to claim 5, **characterised in that**:

    the abnormality diagnostic executing step includes a forced driving step for forcibly driving the exhaust gas recirculation mechanism (31) by forcibly changing a driving command value, and a positive diagnosis determining step for determining that there is an abnormality in the exhaust gas recirculation mechanism (31) when an amount of change in the actual intake air pressure generated by that forced driving is equal to, or less than, a predetermined determining value set based on an amount of change in the driving command value, and the condition tightening step includes a step for changing the predetermined determining value so as to become smaller when it has been determined in the tendency determining step that the first tendency exists than when it has been determined in the tendency determining step that the first tendency does not exist.

7.  The abnormality diagnostic method according to claim 6, **characterised in that:**

    the forced driving step includes a step for gradually changing the driving command value in order to perform the forced driving in a plurality of stages when forcibly driving the exhaust gas recirculation mechanism (31), and
    the abnormality diagnostic executing step includes a step for interrupting the forced driving of the exhaust gas recirculation mechanism (31) by stopping the driving command value from changing in a stage after the presence or absence of an abnormality in the exhaust gas recirculation mechanism (31) has been determined based on the comparison between the predetermined determining value and the amount of change in the actual intake air pressure.

8.  The abnormality diagnostic method according to any one of claims 1 to 7, **characterised in that**:

    in the tendency determining step, it is further determined whether a second tendency, in which a degree thereof is smaller than that of the first tendency, exists as the deviation tendency, and
    the diagnostic mode setting step includes a positive diagnosis prohibiting step for prohibiting a positive diagnosis of the exhaust gas recirculation mechanism (31) when it is determined in the tendency determining step that the second tendency exists.

9.  The abnormality diagnostic method according to any one of claims 1 to 8, **characterised in that**, in the tendency determining step, the deviation tendency relating to the exhaust gas recirculation characteristics is confirmed when that deviation tendency continues uniformly for a predetermined period of time.

10. The abnormality diagnostic method according to claim 9, **characterised in that** the predetermined period of time is set based on at least one of either the actual intake air quantity or the intake air pressure.

11. The abnormality diagnostic method according to any one of claims 1 to 10, **characterised in that**, in the monitoring step, the deviation tendency is monitored when the internal combustion engine (10) is in a stable idling state as the predetermined operating state of the engine (10).

12. The abnormality diagnostic method according to any one of claims 1 to 10, **characterised in that,** in the monitoring step, the deviation tendency is monitored when the predetermined operating state of the engine (10) is such that at least one of at least the intake air quantity and the intake air pressure of the internal combustion engine (10) is constant.

**Patentansprüche**

1. Verfahren zur Abnormalitätsdiagnose für ein Abgasrückführungssteuerungssystem (30), das mit einer Abgasrückführungsvorrichtung (31) versehen ist, die einen Teil des durch ein Abgasrohr (14) einer Brennkraftmaschine mit innerer Verbrennung (10) strömenden Abgases zu einem Saugrohr (12) zurückführt, wobei das Abgasrückführungssteuerungssystem (30) eine zurückgeführte Abgasmenge auf der Grundlage eines Betriebszustands der Brennkraftmaschine (10) durch Ansteuerung der Abgasrückführungsvorrichtung (31) steuert und das Verfahren zur Abnormalitätsdiagnose aufweist:

   - einen Überwachungsschritt zur Überwachung einer Tendenz der Abgasrückführungseigenschaften der Abgasrückführungsvorrichtung (31), wenn die Brennkraftmaschine (10) sich in einem vorbestimmten Betriebszustand befindet, von deren Bezugseigenschaften vor der Ausführung einer Abnormalitätsdiagnose der Abgasrückführungsvorrichtung (31) abzuweichen, wobei der Überwachungsschritt einen Schritt aufweist zum Erfassen der Abweichungstendenz der Abgasrückführungseigenschaften der Abgasrückführungsvorrichtung (31) auf der Grundlage von Ergebnissen eines Vergleichs zwischen einer tatsächlichen zurückgeführten Abgasmenge und eines anhand des vorbestimmten Betriebszustands der Brennkraftmaschine (10) festgelegten vorherbestimmten Werts,

   - einen Diagnosemodus-Einstellungsschritt zum Einstellen eines Diagnosemodus für die Abnormalitätsdiagnose der Abgasrückführungsvorrichtung (31) auf der Grundlage der überwachten Abweichungstendenz der Abgasrückführungseigenschaften, wobei der Diagnosemodus-Einstellungsschritt einen Positivdiagnose-Bedingungsveränderungsschritt aufweist zur variablen Einstellung, auf der Grundlage der in dem Überwachungsschritt erhaltenen Ergebnisse des Vergleichs zwischen der tatsächlichen zurückgeführten Abgasmenge und dem vorherbestimmten Wert, einer Bedingung zum Stellen einer positiven Diagnose, um in dem Abnormalitätsdiagnose-Ausführungsschritt festzustellen, daß in der Abgasrückführungsvorrichtung (31) eine Abnormalität vorliegt, und

   - einen Abnormalitätsdiagnose-Ausführungsschritt zum Ausführen der Abnormalitätsdiagnose auf der Grundlage des festgesetzten Diagnosemodus, **dadurch gekennzeichnet, daß**

   - der Überwachungsschritt einen Tendenzbestimmungsschritt aufweist zum Vergleich der tatsächlichen zurückgeführten Abgasmenge mit dem vorherbestimmten Wert und Feststellen, ob eine erste Tendenz, in welcher die tatsächliche zurückgeführte Abgasmenge unter dem vorherbestimmten Wert liegt, als Abweichungstendenz vorliegt, und

   - der Positivdiagnose-Bedingungsveränderungsschritt einen Bedingungsverschärfungsschritt aufweist, um eine Bedingung zum Stellen einer positiven Diagnose schwerer erfüllbar zu machen, so daß es schwieriger ist, eine positive Diagnose zu stellen, wenn in dem Tendenzbestimmungsschritt festgestellt wird, daß die erste Tendenz vorliegt.

2. Verfahren zur Abnormalitätsdiagnose gemäß Anspruch 1, **dadurch gekennzeichnet, daß** in dem Tendenzbestimmungsschritt die tatsächliche Ansaugluftmenge, wenn sich die Brennkraftmaschine (10) in dem vorbestimmten Betriebszustand befindet, mit dem auf der Grundlage des vorbestimmten Betriebszustands der Brennkraftmaschine (10) festgelegten vorherbestimmten Wert verglichen wird, und festgestellt wird, daß die erste Tendenz vorliegt, wenn die tatsächliche Ansaugluftmenge den vorherbestimmten Wert übersteigt.

3. Verfahren zur Abnormalitätsdiagnose gemäß Anspruch 2, **dadurch gekennzeichnet, daß**

   - der Abnormalitätsdiagnose-Ausführungsschritt einen Zwangsansteuerungsschritt zum zwangsweisen Ansteuern der Abgasrückführungsvorrichtung (31) durch zwangsweise Veränderung eines Ansteuerungsbefehlswerts, welcher die Abgasrückführungsvorrichtung (31) ansteuert, aufweist, und einen Positivdiagnose-Feststellungsschritt zum Feststellen, daß eine Abnormalität in der Abgasrückführungsvorrichtung (31) vorliegt, wenn ein durch diese Zwangsansteuerung erzeugter Veränderungsbetrag der tatsächlichen Ansaugluftmenge gleich oder kleiner als ein anhand eines Veränderungsbetrags des Ansteuerungsbefehlswerts festgelegter vorherbestimmter Feststellungswert ist, und

   - der Bedingungsverschärfungsschritt einen Schritt zum Verändern des vorherbestimmten Feststellungswerts aufweist, so daß dieser, wenn in dem Tendenzbestimmungsschritt festgestellt wurde, daß die erste Tendenz vorliegt, kleiner wird, als wenn in dem Tendenzbestimmungsschritt festgestellt worden wäre, daß die erste Tendenz nicht vorliegt.

4. Verfahren zur Abnormalitätsdiagnose gemäß Anspruch 3, **dadurch gekennzeichnet, daß**

der Zwangsansteuerungsschritt einen Schritt zum allmählichen Verändern des Ansteuerungsbefehlswerts aufweist, um die Zwangsansteuerung in einer Vielzahl von Stufen auszuführen, wenn die Abgasrückführungsvorrichtung (31) zwangsweise angesteuert wird, und der Ausführungsschritt für Abnormalitätsdiagnose einen Schritt zum Unterbrechen der Zwangsansteuerung der Abgasrückführungsvorrichtung (31) durch Anhalten der Veränderung des Ansteuerungsbefehlswerts in einer Stufe, nachdem das Vorliegen oder Nichtvorliegen einer Abnormalität in der Abgasrückführungsvorrichtung (31) auf der Grundlage des Vergleichs zwischen dem vorherbestimmten Feststellungswert und des Veränderungsbetrags der tatsächlichen Ansaugluftmenge festgestellt wurde, aufweist.

5. Verfahren zur Abnormalitätsdiagnose gemäß Anspruch 1, **dadurch gekennzeichnet, daß** in dem Tendenzbestimmungsschritt ein tatsächlicher Ansaugluftdruck, wenn sich die Brennkraftmaschine (10) in dem vorbestimmten Zustand befindet, mit einem anhand dieses vorbestimmten Zustands der Brennkraftmaschine (10) festgelegten vorherbestimmten Wert verglichen wird, und festgestellt wird, daß die erste Tendenz vorliegt, wenn der tatsächliche Ansaugluftdruck unter dem vorherbestimmten Wert liegt.

6. Verfahren zur Abnormalitätsdiagnose gemäß Anspruch 5, **dadurch gekennzeichnet, daß**

- der Abnormalitätsdiagnose-Ausführungsschritt einen Zwangsansteuerungsschritt zum zwangsweisen Ansteuern der Abgasrückführungsvorrichtung (31) durch zwangsweise Veränderung eines Ansteuerungsbefehlswerts und einen Positivdiagnose-Feststellungsschritt aufweist zum Feststellen, daß eine Abnormalität in der Abgasrückführungsvorrichtung (31) vorliegt, wenn ein durch diese Zwangsansteuerung erzeugter Veränderungsbetrag des tatsächlichen Ansaugdrucks gleich oder kleiner als ein anhand eines Veränderungsbetrags des Ansteuerungsbefehlswerts festgesetzter vorherbestimmter Feststellungswert ist, und

- der Bedingungsverschärfungsschritt einen Schritt zum Verändern des vorherbestimmten Feststellungswerts aufweist, so daß dieser, wenn in dem Tendenzbestimmungsschritt festgestellt wurde, daß die erste Tendenz vorliegt, kleiner wird, als wenn in dem Tendenzbestimmungsschritt festgestellt worden wäre, daß die erste Tendenz nicht vorliegt.

7. Verfahren zur Abnormalitätsdiagnose gemäß Anspruch 6, **dadurch gekennzeichnet, daß**

der Zwangsansteuerungsschritt einen Schritt zum allmählichen Verändern des Ansteuerungsbefehlswerts aufweist, um die Zwangsansteuerung in einer Vielzahl von Stufen auszuführen, wenn die Abgasrückführungsvorrichtung (31) zwangsweise angesteuert wird, und der Abnormalitätsdiagnose-Ausführungsschritt einen Schritt aufweist zum Unterbrechen der Zwangsansteuerung der Abgasrückführungsvorrichtung (31) durch Anhalten der Veränderung des Ansteuerungsbefehlswerts in einer Stufe, nachdem auf der Grundlage des Vergleichs zwischen dem vorherbestimmten Feststellungswert und dem Veränderungsbetrag des tatsächlichen Ansaugluftdrucks das Vorliegen oder Nichtvorliegen einer Abnormalität in der Abgasrückführungsvorrichtung (31) festgestellt wurde.

8. Verfahren zur Abnormalitätsdiagnose gemäß einem der Ansprüche 1 bis 7, **dadurch gekennzeichnet, daß**

- in dem Tendenzbestimmungsschritt ferner festgestellt wird, ob eine zweite Tendenz, deren Stärke geringer ist, als die der ersten Tendenz, als Abweichungstendenz vorliegt, und

- der Diagnosemodus-Einstellungsschritt einen Positivdiagnose-Verbotsschritt zum Unterbinden einer positiven Diagnose der Abgasrückführungsvorrichtung (31), wenn in dem Tendenzbestimmungsschritt festgestellt wird, daß die zweite Tendenz vorliegt, aufweist.

9. Verfahren zur Abnormalitätsdiagnose gemäß einem der Ansprüche 1 bis 8, **dadurch gekennzeichnet, daß** in dem Tendenzbestimmungsschritt die mit den Abgasrückführungseigenschaften in Beziehung stehende Abweichungstendenz bestätigt wird, wenn sich diese Abweichungstendenz für eine vorbestimmte Zeitdauer unverändert fortsetzt.

**10.** Verfahren zur Abnormalitätsdiagnose gemäß Anspruch 9, **dadurch gekennzeichnet, daß** die vorbestimmte Zeitdauer auf der Grundlage von zumindest einer der beiden Größen tatsächliche Ansaugluftmenge oder tatsächlicher Ansaugluftdruck festgelegt wird.

**11.** Verfahren zur Abnormalitätsdiagnose gemäß einem der Ansprüche 1 bis 10, **dadurch gekennzeichnet, daß** in dem Überwachungsschritt die Abweichungstendenz überwacht wird, wenn sich die Brennkraftmaschine (10) in einem stabilen Leerlaufzustand als dem vorbestimmten Betriebszustand der Brennkraftmaschine (10) befindet.

**12.** Verfahren zur Abnormalitätsdiagnose gemäß einem der Ansprüche 1 bis 10, **dadurch gekennzeichnet, daß** in dem Überwachungsschritt die Abweichungstendenz überwacht wird, wenn der vorbestimmte Betriebszustand der Brennkraftmaschine (10) derart ist, daß zumindest eine der Größen von zumindest Ansaugluftmenge und Ansaugluftdruck der Brennkraftmaschine (10) konstant ist.

**Revendications**

**1.** Procédé de diagnostic d'anomalie pour un système de commande de recirculation des gaz d'échappement (30) muni d'un mécanisme de recirculation des gaz d'échappement (31) qui retourne une certaine partie des gaz d'échappement circulant à travers un passage des gaz d'échappement (14) d'un moteur à combustion interne (10) vers un passage d'air d'admission (12), le système de commande de recirculation des gaz d'échappement (30) commandant une quantité des gaz d'échappement mis à recirculer en commandant le mécanisme de recirculation des gaz d'échappement (31) sur la base d'un état de fonctionnement du moteur (10), le procédé de diagnostic d'anomalie comprenant :

une étape de surveillance pour surveiller une tendance des caractéristiques de recirculation des gaz d'échappement du mécanisme de recirculation des gaz d'échappement (31) lorsque le moteur à combustion interne (10) est dans un état de fonctionnement prédéterminé à s'écarter de ces caractéristiques de référence avant la conduction d'un diagnostic d'anomalie du mécanisme de recirculation des gaz d'échappement (31), dans lequel l'étape de surveillance inclut une étape pour obtenir la tendance à l'écart des caractéristiques de recirculation des gaz d'échappement du mécanisme de recirculation des gaz d'échappement (31) sur la base des résultats d'une comparaison entre une quantité réelle des gaz d'échappement mis à recirculer et une valeur prédéterminée établie sur la base des états de fonctionnement prédéterminés du moteur (10) ;
une étape d'établissement de mode de diagnostic pour établir un mode de diagnostic pour un diagnostic d'anomalie du mécanisme de recirculation des gaz d'échappement (31), sur la base de la tendance à l'écart surveillée des caractéristiques de recirculation des gaz d'échappement, dans lesquelles l'étape d'établissement de mode de diagnostic inclut une étape de variation de combustion de diagnostic positif pour établir de manière variable, sur la base des résultats de la comparaison entre la quantité réelle des gaz d'échappement mis à recirculer et la valeur prédéterminée obtenue dans l'étape de surveillance, une condition pour établir un diagnostic positif pour déterminer dans l'étape d'exécution de diagnostic d'anomalie qu'il existe une anomalie dans le mécanisme de recirculation des gaz d'échappement (31) ; et
une étape d'exécution de diagnostic d'anomalie pour exécuter le diagnostic d'anomalie sur la base du mode de diagnostic établi, **caractérisé en ce que**
l'étape de surveillance inclut une étape de détermination de tendance pour comparer la quantité réelle des gaz d'échappement mis à recirculer à la valeur prédéterminée et pour déterminer s'il existe une première tendance, dans laquelle la quantité réelle des gaz d'échappement mis à recirculer est en dessous de la valeur prédéterminée, existe comme tendance à l'écart, et
l'étape de variation de condition de diagnostic positif inclut une étape de rétrécissement de condition pour établir une condition pour rendre un diagnostic positif plus difficile à être satisfait de sorte qu'il est plus difficile qu'un diagnostic positif soit fait lorsqu'il est déterminé dans l'étape de détermination de tendance que la première tendance existe.

**2.** Procédé de diagnostic d'anomalie selon la revendication 1, **caractérisé en ce que,** dans l'étape de détermination, la quantité d'air admission réelle lorsque le moteur à combustion interne (10) est dans l'état de fonctionnement prédéterminé est comparée à la valeur prédéterminée établie sur la base de l'état de fonctionnement prédéterminé du moteur (10), et il est déterminé que la première tendance existe lorsque la quantité réelle d'air admission dépasse la valeur prédéterminée.

**3.** Procédé de diagnostic d'anomalie selon la revendication 2, **caractérisé en ce que** :

l'étape d'exécution du diagnostic d'anomalie inclut une étape de commande forcée pour commander de manière forcée le mécanisme de recirculation des gaz d'échappement (31) en changeant de manière forcée une valeur d'ordre de commande qui commande le mécanisme de recirculation des gaz d'échappement (31), et l'étape de détermination de diagnostic positif pour déterminer qu'il existe une anomalie dans le mécanisme de recirculation des gaz d'échappement (31) lorsqu'une quantité de changement de la quantité réelle d'air d'admission générée par cette commande forcée est égale à ou inférieure à une valeur de détermination prédéterminée établie sur la base d'une quantité de changement dans la valeur d'ordre de commande, et l'étape de rétrécissement de condition inclut une étape pour changer la valeur de détermination prédéterminée de façon à devenir plus petite lorsqu'il a été déterminé dans l'étape de détermination de tendance qu'une première tendance existe que lorsqu'il a été déterminé dans l'étape de détermination de tendance que la première tendance n'existe pas.

**4.** Procédé de diagnostic d'anomalie selon la revendication 3, **caractérisé en ce que :**

l'étape de commande forcée inclut une étape pour changer progressivement la valeur d'ordre de commande afin d'effectuer la commande forcée à une pluralité d'étages lors de la commande forcée du mécanisme de recirculation des gaz d'échappement (31), et l'étape d'exécution de diagnostic d'anomalie inclut une étape pour interrompre la commande forcée du mécanisme de recirculation des gaz d'échappement (31) en arrêtant le changement de la valeur d'ordre de commande dans un étage après que la présence ou l'absence d'une anomalie dans le mécanisme de recirculation des gaz d'échappement (31) ait été déterminée sur la base de la comparaison entre la valeur de détermination prédéterminée et la quantité de changement de la quantité réelle d'air d'admission.

**5.** Procédé de diagnostic d'anomalie selon la revendication 1, **caractérisé en ce que,** dans l'étape de détermination de tendance, une pression réelle d'air admission lorsque le moteur à combustion interne (10) est dans l'état de fonctionnement prédéterminé est comparée à une valeur prédéterminée établie sur la base de cet état de fonctionnement prédéterminé du moteur (10), et de déterminer que la première tendance existe lorsque la pression réelle de l'air d'admission est en dessous de la valeur prédéterminée.

**6.** Procédé de diagnostic d'anomalie selon la revendication 5, **caractérisé en ce que :**

l'étape d'exécution de diagnostic d'anomalie inclut une étape de commande forcée pour commander de manière forcée le mécanisme de recirculation des gaz d'échappement (31) en changeant de manière forcée une valeur d'ordre de commande, et une étape de détermination de diagnostic positif pour déterminer qu'il existe une anomalie dans le mécanisme de recirculation des gaz d'échappement (31) lorsqu'une quantité de changement de la pression réelle d'air admission générée par cette commande forcée est égale à ou inférieure à une valeur de détermination prédéterminée établie sur la base d'une quantité de changement de la valeur d'ordre de commande, et
l'étape de rétrécissement de condition inclut une étape pour changer la valeur de détermination prédéterminée de façon à devenir plus petite lorsqu'il a été déterminé dans l'étape de détermination de tendance que la première tendance existe que lorsqu'il a été déterminé dans l'étape de détermination de tendance que la première tendance n'existe pas.

**7.** Procédé de diagnostic d'anomalie selon la revendication 6, **caractérisé en ce que :**

l'étape de commande forcée inclut une étape pour changer progressivement la valeur d'ordre de commande afin d'effectuer la commande forcée en une pluralité d'étages lors de la commande de manière forcée du mécanisme de recirculation des gaz d'échappement (31), et l'étape d'exécution de diagnostic d'anomalie inclut une étape pour interrompre la commande forcée du mécanisme de recirculation des gaz d'échappement (31) en arrêtant le changement de la valeur d'ordre de commande dans un étage après que la présence ou l'absence d'une anomalie dans le mécanisme de recirculation des gaz d'échappement (31) ait été déterminée sur la base de la comparaison entre la valeur de détermination prédéterminée et la quantité de changement de la pression réelle de l'air d'admission.

**8.** Procédé de diagnostic d'anomalie selon une quelconque des revendications 1 à 7, **caractérisé en ce que :**

dans l'étape de détermination de tendance, il est de plus déterminé s'il existe une seconde tendance, dans laquelle son degré est plus petit que celui de la première tendance, comme tendance à l'écart, et

l'étape d'établissement de mode de diagnostic inclut une étape empêchant le diagnostic positif pour empêcher un diagnostic positif du mécanisme de recirculation des gaz d'échappement (31) lorsqu'il est déterminé dans l'étape de détermination de tendance que la seconde tendance existe.

9. Procédé de diagnostic d'anomalie selon l'une quelconque des revendications 1 à 8, **caractérisé en ce que,** dans l'étape de détermination de tendance, la tendance à l'écart se rapportant aux caractéristiques de recirculation des gaz d'échappement est confirmée lorsque cette tendance à l'écart continue uniformément pendant une période de temps prédéterminée.

10. Procédé de diagnostic d'anomalie selon la revendication 9, **caractérisé en ce que** la période de temps prédéterminée est établie sur la base d'au moins un de la quantité réelle d'air admission ou de la pression réelle d'air admission.

11. Procédé de diagnostic d'anomalie selon l'une quelconque des revendications 1 à 10, **caractérisé en ce que,** dans l'étape de surveillance, la tendance à l'écart est surveillée lorsque le moteur à combustion interne (10) est dans un état de ralenti stable comme l'état de fonctionnement prédéterminé du moteur (10).

12. Procédé de diagnostic d'anomalie selon l'une quelconque des revendications 1 à 10, **caractérisé en ce que,** dans l'étape de surveillance, la tendance à l'écart est surveillée lorsque l'état de fonctionnement prédéterminé du moteur (10) est tel qu'au moins un de la quantité d'air d'admission et la pression d'air d'admission du moteur à combustion interne (10) est constante.

# F I G . 1

# FIG.2

```
        ┌─────────────────────────────────────────────┐
        │   DEVIATION TENDENCY MONITORING ROUTINE     │
        └─────────────────────────────────────────────┘
                            │
                            ▼            S100
                    ╱────────────────╲
         NO    ╱        ENGINE          ╲
     ◄────────       IN STABLE
                     IDLING STATE
                          ?
                    ╲────────────────╱
                            │ YES
                            ▼              S110
                    ╱────────────────╲
                        ACTUAL               NO
                    INTAKE AIR        ──────────────────┐
                   QUANTITY GN>
                  PREDETERMINED
                    VALUE GNC1
                          ?
                    ╲────────────────╱
                            │ YES    S120                          S125
                            ▼
              ┌────────────────────────┐          ┌──────────────────┐
              │ INCREASE ELAPSED TIME  │          │  RESET ELAPSED   │
              │   COUNTER VALUE C      │          │  TIME COUNTER    │
              │   INCREMENTALLY        │          │    VALUE C       │
              └────────────────────────┘          └──────────────────┘
                            │                              │
                            ▼            S130              │
                    ╱────────────────╲                    │
                        ELAPSED             NO             │
                  TIME COUNTER VALUE C> ─────────────────► │
                  PREDETERMINED
                     VALUE C1
                          ?
                    ╲────────────────╱
                            │ YES    S140
                            ▼
              ┌────────────────────────┐
              │  EGR INSUFFICIENT      │
              │  FLAG XS←"ON"          │
              └────────────────────────┘
                            │
                            ▼
                    ┌──────────────┐
                    │     END      │
                    └──────────────┘
```

# F I G . 3

GN

GNC1

GNC0

NORMAL RANGE

INSUFFICIENT RANGE

AMOUNT OF RECIRCULATED EXHAUDT GAS

# F I G . 4

ACTUAL OPENING AEGR

(a)

(b)

(c)

(d)

OPENING DRIVING COMMAND VALUE DEGR

# F I G . 5

```
        ╭─────────────────────╮
        │    ABNORMALITY      │
        │ DIAGNOSTIC ROUTINE  │
        ╰─────────────────────╯
                  │
                  ▼
            ◇─────────────◇  S200
   NO      ╱     HAVE       ╲
◄──────── ╱  CONDITIONS FOR  ╲
         ╱ EXECUTING ABNORMALITY ╲
         ╲   DIAGNOSTIC BEEN    ╱
          ╲    FULFILLED      ╱
           ╲       ?        ╱
            ◇─────────────◇
                  │ YES
                  ▼
            ◇─────────────◇  S210
           ╱      EGR       ╲      NO
           ╲  INSUFFICIENT   ╱──────────────┐
            ╲ FLAG XS="ON"  ╱                │
             ╲     ?      ╱                  │
              ◇────────◇                     │
                  │ YES        S220          │        S225
                  ▼                          ▼
      ┌───────────────────────┐   ┌───────────────────────┐
      │ ABNORMALITY DETERMINING│   │ ABNORMALITY DETERMINING│
      │  VALUE KDGN←KDGNS      │   │  VALUE KDGN←KDGNE      │
      └───────────────────────┘   └───────────────────────┘
                  │                          │
                  │◄─────────────────────────┘
                  ▼
      ┌───────────────────────┐
      │  FORCIBLY DRIVE FLOW   │  S230
      │    CONTROL VALVE       │
      └───────────────────────┘
                  │
                  ▼
            ◇─────────────◇  S240
           ╱      HAS       ╲
          ╱  PREDETERMINED   ╲
         ╱   PERIOD OF TIME    ╲
        ╱  ELAPSED AFTER FLOW   ╲  YES
        ╲ CONTROL VALVE HAS SHIFTED ╱──────────┐
         ╲   TO FULLY OPEN OR    ╱             │
          ╲   FULLY CLOSED      ╱              │
           ╲     STATE        ╱                │
            ╲       ?       ╱                  │
              ◇────────◇                       │
                  │ NO                         │
                  ▼                            │
            ◇─────────────◇  S250              │
   NO      ╱    INTAKE      ╲                  │
◄──────── ╱  AIR QUANTITY    ╲                 │
         ╱ CHANGE AMOUNT DGN > ╲               │
         ╲   ABNORMALITY      ╱          S260  │
          ╲  DETERMINING     ╱                 ▼
           ╲ VALUE KDGN     ╱   ┌───────────────────────┐
            ╲     ?       ╱     │    ABNORMALITY        │
              ◇────────◇        │  FLAG XFAIL←"ON"      │
                  │ YES         └───────────────────────┘
                  ▼                          │
      ┌───────────────────────┐              │
      │ ABNORMALITY DIAGNOSTIC │  S270        │
      │COMPLETE FLAG XDIAG←"ON"│◄─────────────┘
      └───────────────────────┘
                  │
                  ▼
            ╭─────────╮
            │   END   │
            ╰─────────╯
```

# F I G . 6

(a) OPENING DRIVING
    COMMAND VALUE DEGR

ΔK

FULLY CLOSED

(b) ACTUAL INTAKE AIR
    QUANTTY GN

KDGN

(c) ABNORMALITY DIAGNOSTIC
    EXECUTION CONDITION
    FLAG XDIAGEX

(d) ABNORMALITY DIAGNOSTIC
    COMPLETE FLAG XDIAG

(e) ABNORMALITY FLAG XFAIL

t1      t2  t3    t4  t5

EP 1 365 139 B1

30